# EUROPEAN PATENT SPECIFICATION

(11) **EP 4 509 726 B1**
(45) Date of publication and mention of the grant of the patent: **27.05.2026**
(21) Application number: 24716073.2
(22) Date of filing: 04.02.2024
(51) Int. Cl.: F16B 5/06, F16B 21/07

(54) **FEMALE CONNECTOR, MALE CONNECTOR, CONNECTING DEVICE, ARTICLE, AND ARTICLE ASSEMBLY**
BUCHSENVERBINDER, STECKER, VERBINDUNGSVORRICHTUNG, ARTIKEL UND ARTIKELANORDNUNG
RACCORD FEMELLE, RACCORD MÂLE, DISPOSITIF DE RACCORDEMENT, ARTICLE ET ENSEMBLE ARTICLE

(30) Priority: 29.06.2023 CN 202310788352
(43) Date of publication of application: 19.02.2025
(73) Proprietor: Ziel Home Furnishing Technology Co., Ltd., Zhengzhou, Henan 450000 (CN)
(72) Inventor: SONG, Chuan, Zhengzhou, Henan 450000 (CN)
(74) Representative: Murgitroyd & Company
(86) International application number: PCT/CN2024/075781
(87) International publication number: WO 2025/001149

(56) References cited:
- WO-A1-2011/049096
- CN-A- 116 696 910
- DE-B3- 10 229 300
- JP-A- 2005 291 318
- JP-A- H07 208 424
- JP-B1- 6 727 530
- JP-U- H0 230 513
- JP-U- H0 614 520
- JP-U- S56 129 604
- US-A- 5 211 519
- US-A- 5 211 519
- US-A1- 2020 063 776
- US-B2- 9 303 665

## Description

### TECHNICAL FIELD

The present disclosure relates to a field of connection device technologies, and in particular to a female connector, a male connector and a connection device.

### BACKGROUND

Some products, such as household products, are usually assembled from a plurality of articles. Specifically, during transportation, in order to reduce the packaging volume of a product, a plurality of articles need to be disassemble and then transported. After reaching the destination, users need to assemble the plurality of articles together. For convenience of assembly, two articles are usually connected together by using a connection device including a female connector and a male connector. However, the configuration of the traditional connection device is unreasonable, which causes the male connector to be prone to damaged.

JPS56129604 provides a retainer with a tubular retainer body, the tubular retainer body is formed with an inner shoulder on one end of its inner peripheral surface. When the mounted object is inserted into the groove formed by the tubular retainer body, the inner shoulder is capable of engaging with the constriction step provided at the tip of the boss portion of the mounted object.

Further female and male connectors are shown in documents DE 102 29 300 B3 and US 2020/0063776 A1.

### SUMMARY

Therefore, this present disclosure provides a female connector, a male connector, and a connection device, so as to at least solve the problem that the male connector of the conventional connecting device is prone to damage.

On the one aspect, the present disclosure provides a female connector. The female connector is configured to be fixed to a first article and be coupled to a male connector fixed to a second article, so as to connect the first article to the second article. The female connector includes: a main body portion, including a pair of side walls spaced apart in a width direction to define, between the pair of side walls, an insertion groove for an insertion portion of the male connector to be inserted, wherein each side wall extends in a length direction, and the insertion portion includes, downward in sequence, an abutting portion and a head portion; and a pair of elastic walls, extending downward and inward respectively from the pair of side walls to respectively form a pair of abutting ends extending in the insertion groove. The pair of elastic walls are configured to be capable of elastically deforming outward when the pair of elastic walls are pressed outward by the head portion inserted in downward, such that the pair of abutting ends allow the head portion to pass between the pair of abutting ends, and can abut against the abutting portion after the head portion has passed between the pair of abutting ends so as to prevent the head portion from being pulled out upward, wherein the insertion groove is configured to allow the insertion portion to slide between a first position and a second position relative to the female connector in the length direction in the insertion groove, such that when the insertion portion is located at the first position, the pair of abutting ends abut against the abutting portion, and when the insertion portion is located at the second position, the pair of abutting ends does not abut against the abutting portion, so as to allow the insertion portion to be pulled out upwards from the insertion groove.

In a possible implementation, each elastic wall has a cross section shape of an arc which is convex outward.

In a possible implementation, a curvature of each elastic wall increases downward.

In a possible implementation, a thickness of each elastic wall decreases downward.

In a possible implementation, the female connector further includes a plurality of coupling portions, and the plurality of coupling portions extends outward from an outer side surface of the main body portion and/or extends outward from two outer side surfaces of the pair of elastic walls.

In a possible implementation, an upper side surface of each coupling portion extends outward while extending downward.

In a possible implementation, the plurality of coupling portions include a pair of first coupling portions, the pair of first coupling portions extend outward from the two outer side surfaces of the pair of elastic walls respectively, and an end surface of each abutting end extends outward while extending downward.

In a possible implementation, the plurality of coupling portions further includes a pair of second coupling portions, and the pair of second coupling portions extend outward respectively from two outer side surfaces of the pair of side walls.

In a possible implementation, each first coupling portion and a corresponding second coupling portion are located on a same side of the female connector in the width direction, the first coupling portion and the second coupling portion are substantially flush in a height direction and are spaced apart from each other in a length direction, an end portion, of the first coupling portion, away from the second coupling portion gradually extends inward while extending away from the second coupling portion in the length direction, and an end portion, of the second coupling portion, away from the first coupling portion gradually extends inward while extending away from the first coupling portion in the length direction.

In a possible implementation, the female connector further includes a pair of end walls, the pair of end walls are respectively located at two ends of the pair of side walls in a length direction, each end wall extends between the pair of side walls, the plurality of coupling portions further include at least one third coupling portion, and the at least one third coupling portion extends outward respectively from at least one outer side surface of at least one end wall.

In a possible implementation, the pair of end walls includes a first end wall and a second end wall, the at least one the third coupling portion is one third coupling portion, the third coupling portion extends outward from an outer side surface of the first end wall, an outer side surface of the second end wall is provided with a plurality of convex strip portions, and outer side surfaces of the plurality of convex strip portions together define a cylindrical surface.

In a possible implementation, the female connector further includes a skirt portion which is located at an upper end of the main body portion and extends outward from an outer side surface of the main body portion.

In a possible implementation, the skirt portion and the main body portion together define a guide surface, the guide surface extends inward while extending downward from an upper side surface of the skirt portion to an inner side surface of the main body portion, and an upper edge of the guide surface is located further outward than the outer side surface of the main body portion.

On another aspect, the present disclosure provides a male connector. The male connector is configured to be coupled to the above female connector fixed to a first article, so as to connect a second article fixed to the male connector to the first article. The male connector includes an insertion portion, the insertion portion includes, downward in sequence, an abutting portion and a head portion. the head portion can press, by inserting downward into the insertion groove of the female connector, the pair of elastic walls of the female connector to make the pair of elastic walls elastically deform outward, such that the pair of abutting ends of the pair of elastic walls allow the head portion to pass through the pair of abutting ends, and can abut against the abutting portion after the head portion has passed through the pair of abutting ends, so as to prevent the head portion from being pulled out upward.

The abutting portion includes a pair of abutting surfaces, the pair of abutting surfaces are respectively located on two opposite sides of the abutting portion in the width direction. In a possible implementation, each abutting surface extends outward while extending downward.

The abutting portion includes a plurality of step portions arranged in a downward direction, the plurality of step portions have widths increasing in successive order in the downward direction, and each step portion is provided with the pair of abutting surfaces.

In a possible implementation, a plurality of abutting surfaces, of the plurality of step portions, on each side of the insertion portion in the width direction respectively have a plurality of included angles relative to a reference plane perpendicular to a height direction, and the plurality of included angles decreases in successive order in the downward direction.

The way provided by the present disclosure is beneficial to improving the service life of the male connector of the connection device.

### BRIEF DESCRIPTION OF THE DRAWINGS

In order to more clearly illustrate the technical solutions of embodiments of the present disclosure, the accompanying drawings that need to be used in the embodiments will be briefly described below.

It should be understood that the following drawings only illustrate some embodiments of the present disclosure and are should not be regard as limiting the scope.

It should be understood that the same or similar reference numerals are used in the drawings to represent the same or similar elements.

It should be understood that the drawings are only schematic, and dimensions and proportions of elements in the drawings are not necessarily precise.
FIG.1 is a schematic cross-sectional view of a traditional connection device.
FIG. 2 is a schematic structural diagram of an article assembly according to an embodiment of the present disclosure.
FIG. 3 is a schematic exploded view of the article assembly in FIG. 2.
FIG. 4 to FIG. 7 are schematic structural diagrams of a female connector of the article assembly in FIG. 2.
FIG. 8 is a cross-sectional view taken along line A-A in FIG. 6.
FIG. 9 is a cross-sectional view taken along line B-B in FIG. 6.
FIG. 10 is a cross-sectional view taken along line C-C in FIG. 7.
FIG. 11 to FIG. 14 are schematic structural diagrams of a male connector of the article assembly in FIG. 2.
FIG. 15 and FIG. 16 are schematic structural diagrams of a connection device of the article assembly in FIG. 2, wherein an insertion portion of the male connector is located at a first position relative to the female connector.
FIG. 17 is a cross-sectional view taken along line D-D in FIG. 16.
FIG. 18 and FIG. 19 are schematic structural diagrams of the connection device of the article assembly in FIG. 2, wherein the insertion portion of the male connector is located at a second position relative to the female connector.
FIG. 20 is a cross-sectional view taken along line E- E in FIG. 19.
FIG. 21 is a cross-sectional view taken along line F- F in FIG. 19.
FIG. 22 and FIG. 23 are partial structural diagrams of an article in FIG. 2.
FIG. 24 is a cross-sectional view taken along line G-G in FIG. 22.
FIG. 25 is a cross-sectional view taken along line H-H in FIG. 22.
FIG. 26 is a schematic structural diagram of a combination of an article of the article assembly and the female connector of the article assembly of FIG. 2.
FIG. 27 is a cross-sectional view taken along line J-J in FIG. 26.
FIG. 28 is a cross-sectional view taken along line K-K in FIG. 26.
FIG. 29 is a cross-sectional view taken along line P-P in FIG. 26.
FIG. 30 is a schematic structural diagram of a combination of an article and the connection device of the article assembly of FIG. 2.
FIG. 31 is a cross-sectional view taken along line Q-Q in FIG. 30.
FIG. 32 is a schematic structural diagram of a female connector according to a various example 1 of the present disclosure.
FIG. 33 is a transverse cross-sectional view of a combination of an article and a female connector according to a various example 2 of the present disclosure.
FIG. 34 and FIG. 35 are schematic structural diagrams of a female connector according to a various example 3 of the present disclosure.
FIG. 36 is a cross-sectional view of a combination of an article and a female connector according to a various example 4 of the present disclosure.
FIG. 37 is a schematic structural diagram of a male connector according to a various example 5 of the present disclosure.

### DETAILED DESCRIPTIONS OF THE EMBODIMENTS

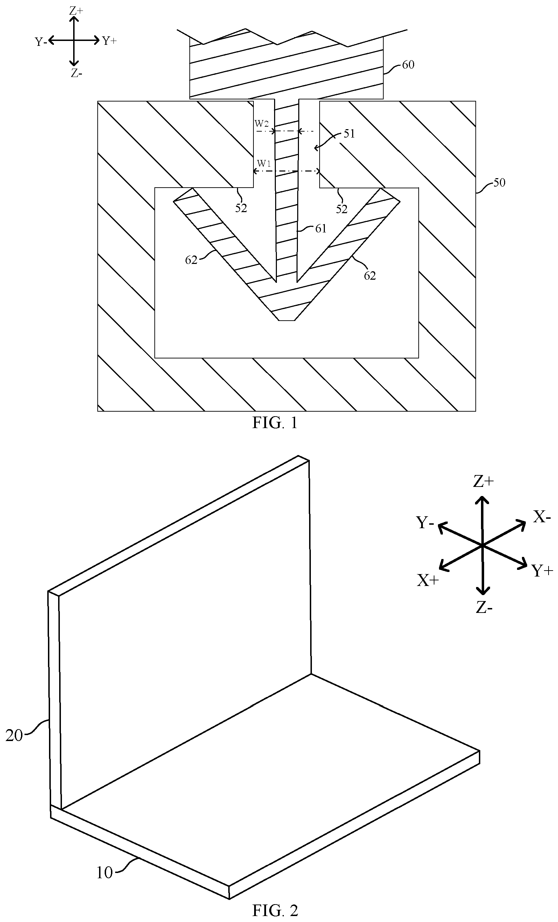

Some products are consist of a plurality of articles that are connected together by a connection device. For ease of understanding, examples are provided below with reference to FIG. 1, to describe a traditional connection device and existing problems thereof.

Referring to FIG. 1, the traditional connection device includes a female connector and a male connector. The female connector is fixed to an article, the female connector is fixed to other article, and the female connector and the male connector are coupled together to connect the two articles together. The female connector is provided with an insertion groove 51, the insertion groove 51 is provided with a pair of abutting surfaces 52. The male connector 60 includes an insertion portion, and the insertion portion includes a connection portion extending in a length direction and a pair of elastic walls 62 arranged at a bottom end of the connection portion 61.

In the process of inserting the insertion portion into the insertion groove 51, the pair of elastic walls 62 are folded firstly to pass an opening of the insertion groove, and then the pair of elastic walls 62 unfold after having passing through the opening and abut against a pair of abutting surfaces 52 to prevent the insertion portion from being pulled out upward from the insertion groove 51. A width ***W1*** of the opening of the insertion groove should not be too large. If the width ***W1*** is too large, the pair of elastic walls 62 are prone to detach out from the insertion groove 51. In addition, in order to ensure that the pair of elastic walls 62 can smoothly pass through the opening, the width of the whole of the connection portion 61 and the folded pair of elastic walls 62 should be less than the width ***W1*** of the opening, which causes the connection portion 61 is too thin. It should be understood that the excessively thin connection portion 61 is prone to be fracture or bend during installation and usage, resulting in damage to the male connector 60.

Embodiments of the present disclosure are described below with examples and reference to the accompanying drawings. It should be understood that the implementations of the present disclosure may be various and should not be regarded as being limited to the embodiments herein, and the embodiments herein are merely for a more thoroughly and clear understanding of the present disclosure.

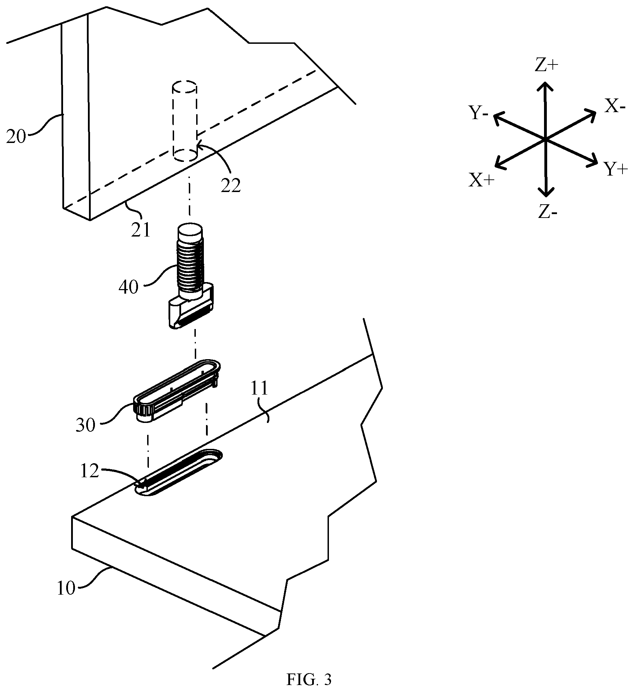

Referring to FIG. 2 and FIG. 3, an article assembly provided by the present disclosure may include an article 10 (that is, a first article), an article 20 (that is, a second article) and a connection device, and the connection device may include the female connector 30 and a male connector 40. The article 10 and the article 20 may be household articles, that is, they may constitute a part of a household product or a whole household product. The female connector 30 is configured to be fixed to the article 10, the male connector 40 is configured to be fixed to the article 20. The male connector 40 is configured to be inserted into the female connector 30 to be coupled to the female connector 30, thereby connecting the first article 10 to the second article 20.

For example, the article 10 may be provided with a mounting groove 12 (that is, a first mounting groove), the mounting groove 12 may be recessed downward from an upper surface 11 of the article 10, and the female connector 30 may be inserted into the mounting groove 12, so as to be fixed to the article 10. For example, the article 20 may be provided with a mounting groove 22 (that is, a second mounting groove), the mounting groove 22 may be recessed upward from a lower surface of the article 20, and the male connector 40 may be inserted into the mounting groove 22, so as to be fixed to the article 20. In other examples, the female connector and the male connector may be respectively fixed to the article 10 and the article 20 in other manners. For example, the alternative fixing manner may include an adhesive or a fastener, or the like.

It should be understood that in the present disclosure, orientation descriptions such as "upper", "lower", "height", "length", and "width" are relative rather than absolute. These orientation descriptions are applicable when elements in the present disclosure are in the placements and positions shown in the drawings. It should be noted that, in the drawings of the present disclosure, an arrow Z+ and an arrow Z- are used to respectively indicate an upper side and a lower side in a height direction, an arrow X+ and an arrow X- are used to respectively indicate two opposite sides in a length direction, and an arrow Y+ and an arrow Y- are used to respectively indicate two opposite sides in a width direction.

It should be noted that, besides the above members, the article assembly provided by the present disclosure may further include other members. All of the members included in the article assembly may form a product. For example, the product may be a household product. The household product may be a product used by a human, for example, a television cabinet, a wardrobe, a storage box, a table, or the like. The household product may also be a product for use by a pet, for example, a pet climbing rack or a pet house. Certainly, the product is not limited to a household product, or may be other product. The articles 10, 20 may be plates, for example, wood plates, plastic plates, metal plates, or the like. Certainly, in other examples, the articles 10, 20 may also be other members, for example, may be rods, frameworks, or the like.

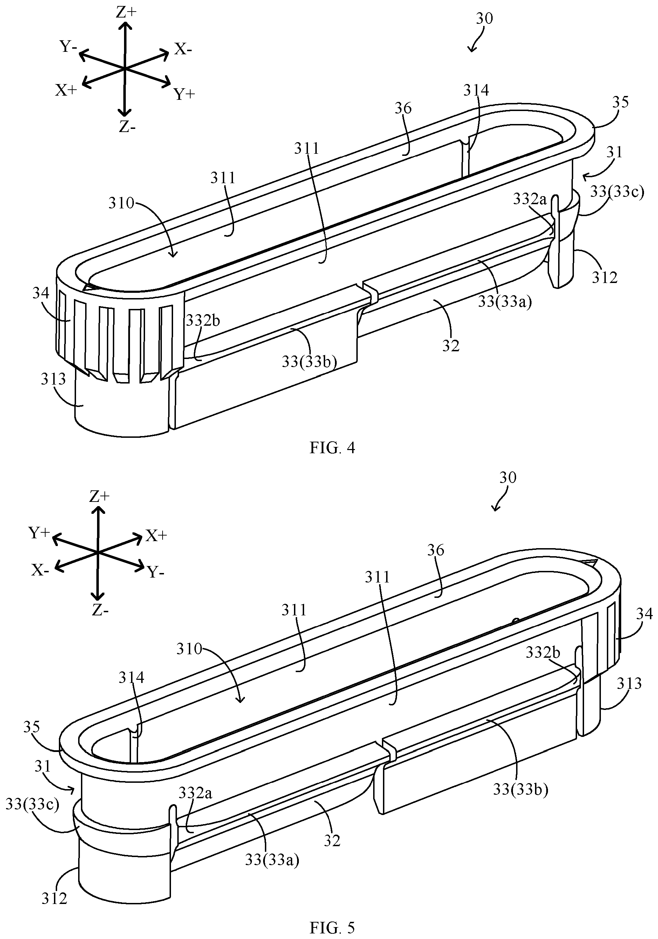

Referring to FIG. 4 to FIG. 10, the female connector 30 includes a main body portion 31 and a pair of elastic walls 32. The main body portion 31 includes a pair of side walls 311, each side wall 311 extends in the length direction, and the pair of side walls 311 are spaced apart in the width direction, so as to define an insertion groove 310 between the pair of side walls 311. The pair of elastic walls 32 extend inward while extending downward respectively from the pair of side walls 311, so as to form a pair of abutting ends 321 extending into the insertion groove 310. For example, the abutting end 321 of each elastic wall 32 may be a lower end of the elastic wall 32.

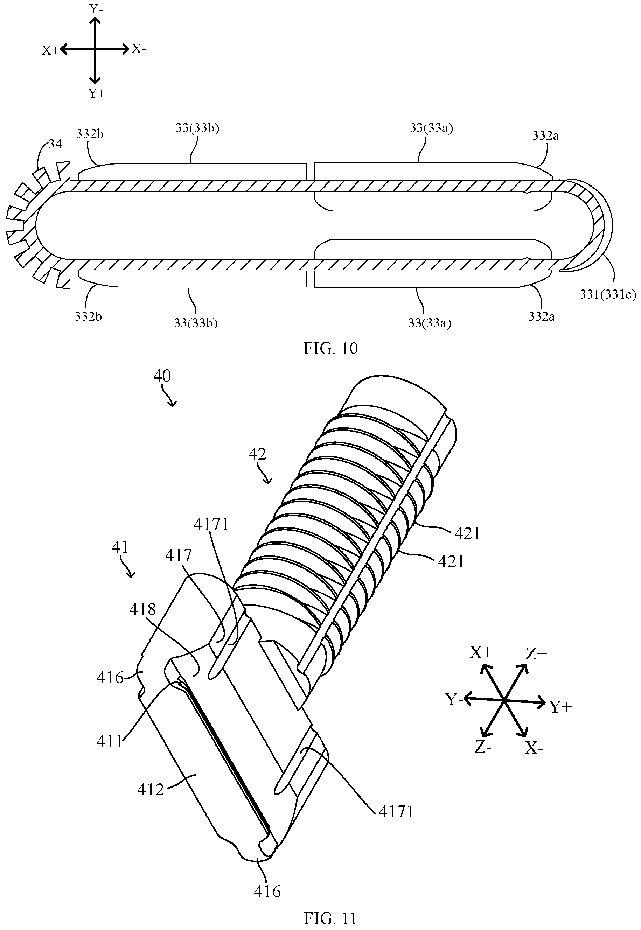

Referring to FIG. 11 to FIG. 14, the male connector 10 may include a insertion portion 41, the insertion portion 41 is configured to be inserted into the insertion groove 310 of the female connector 30 so as to be coupled to the female connector 30. The insertion portion 31 may include an abutting portion 411 and a head portion 412, and the head portion 412 is located below the abutting portion 411. The male connector 40 may further include a fixing portion 42, the fixing portion 42 is configured to be fixed to the article 20. For example, the insertion portion 41 may be located below the fixing portion 42 and connected to a lower end of the fixing portion 42.

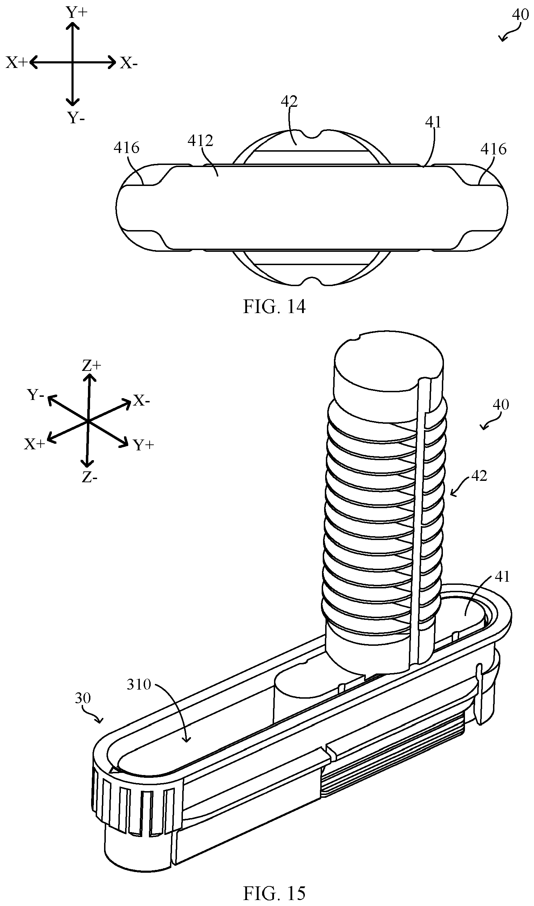

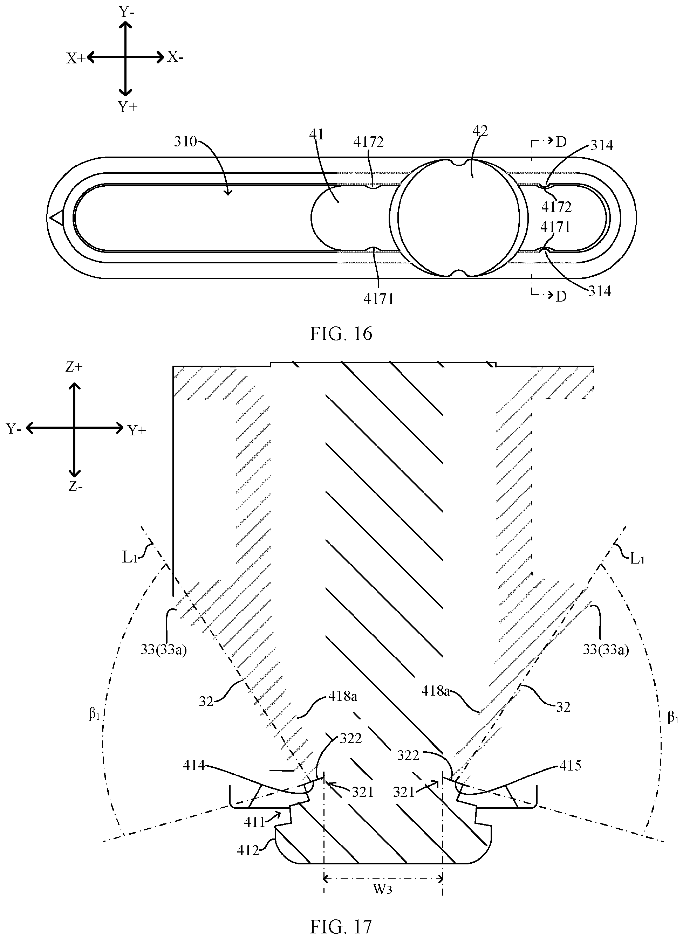

Referring to FIG. 15 to FIG. 17, the pair of elastic walls 32 are configured to be capable of elastically deforming outward when the elastic walls 32 are pressed outward by the head portion 412 inserted in downward, such that the pair of abutting ends 321 allow the head portion 412 to pass between the pair of abutting ends 321, and can abut against the abutting portion 411 after the head portion 412 has passed between the pair of abutting ends 321 so as to prevent the head portion 412 from being pulled out upward. In other words, by inserting the insert portion 41 downward into the insertion groove 310, the insertion portion 41 can reach the position shown in FIG. 17. When the insertion portion 41 is located in the position in FIG. 17, the head portion 412 located below the pair of abutting ends 321, and the pair of abutting ends 321 abut against the abutting portion 411.

Specifically, as the insertion portion 41 is being inserted downward, the head portion 412 presses the pair of elastic walls 32 outwards so that the pair of elastic walls 32 elastically deform outward, and finally, the head portion 412 passes between the pair of abutting ends 321, and move to to the position which is located below the pair of abutting ends 321 and is shown in FIG. 17. After the head portion 412 has passed between the pair of abutting ends 321, the pair of abutting ends 321 move inward under the action of the elastic restoring force to abut against the abutting portion 411. Since the pair of abutting ends 321 abut against the abutting portion 411, the insertion portion 41 cannot be pulled out upward, thereby the purpose that the article 10 fixed to the female connector 30 is connected to the article 20 fixed to the male connector 40 is achieved.

In the way provided by the present disclosure, it is not required that the insertion portion 41 of the male connector 40 is provided with a very thin portion, so that the overall strength of the insertion portion 41 is higher, and the insertion portion 41 is not prone to bend or fracture during installation and usage. Therefore, the way provided by the present disclosure is beneficial to improving the service life of the male connector 40.

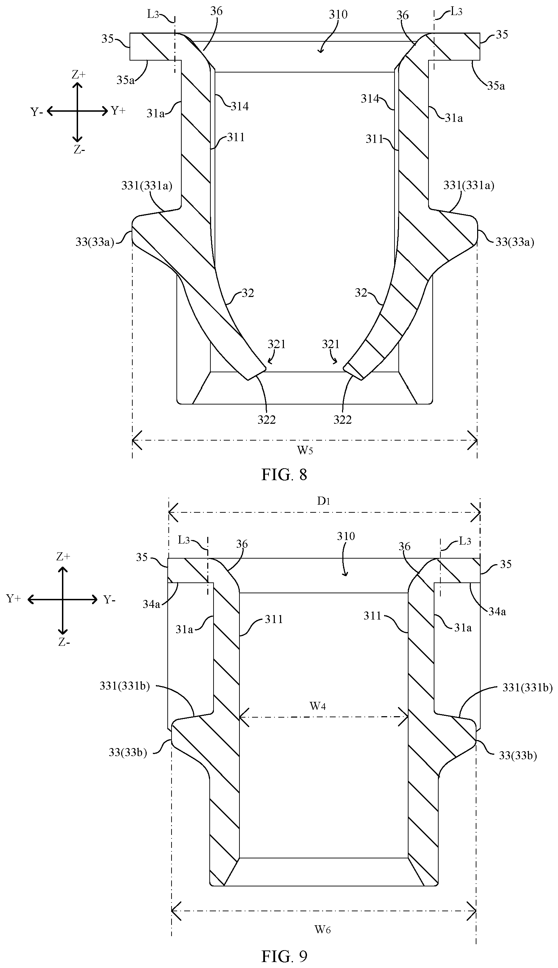

In a possible example, the thinnest portion of the insertion portion 41 may be defined by the abutting portion 411. For example, referring to FIG. 9 and FIG. 17, a minimum width *W3* of the abutting portion 411 may be greater than 50% of a distance ***W4*** between the pair of side walls 311. In particular, the width ***W3*** may be 0.5 to 0.8 times the width ***W4.***

The material of the pair of elastic walls 32 is not specifically limited in the present disclosure, as long as the function of the pair of elastic walls 32 can be achieved. The pair of elastic walls 32 may be made of the same material as the other portions of the female connector 30, or may be made of different materials. For example, a pair of elastic walls 32 may, but are not limited to, be made of one or more of the following materials: polyoxymethylene (POM), polyhexamethylene adipamide (P66), polyamide 6 (PA6), polyphthalamide (PPA), polyphenylene sulfide (PPS), and the like.

The fixing portion 42 may be fixed to the article 20 in various manners, which is not specifically limited in the present disclosure. As an example, referring to FIG. 11, the fixing portion 42 may be in a columnar shape extending in the height direction, and the periphery of the fixing portion 42 may be provided with a plurality of teeth 421. When the fixing portion 42 is inserted into the mounting groove 22 of the article 20, the plurality of teeth 421 are pressed to deform by the inner surface of the mounting groove 22, so as to prevent the fixing portion 42 from being pulled out downward from the mounting groove 22, thereby achieving the purpose of fixing the male connector 40 to the article 20.

Referring to FIG. 8 and FIG. 17, each elastic wall 32 may be configured to extend inward while extending downward, and is provided with a cross-sectional shape of an arc which is convex outward. It should be noted that, in the present disclosure, a cross section of an element may refer to a cross section taken along a plane perpendicular to the length direction.

When the male connector 40 is subjected to an upward force, the abutting portion 411 presses the pair of abutting ends 321 of the pair of elastic walls 32. According to this configuration of each elastic wall 32, when the pair of abutting ends 321 is pressed by the abutting portion 411, the pair of abutting ends 321 will be with an inward movement trend. In this way, even if the male connector 40 is subjected to a larger upward force, the pair of abutting ends 321 can reliably abut against the abutting portion 411 without being accidentally separated from the abutting portion 411. In addition, according to this configuration of each elastic wall 32, when the pair of abutting ends 321 are pressed by the abutting portion 411, the pair of elastic walls 32 will bear more compressive stress and less shear stress, which is beneficial to reducing the risk of damage to the pair of elastic walls 32.

With continued reference to FIG. 8 and FIG.17, a curvature of each elastic wall 32 may increase while elastic wall 32 extends downward.

According to this configuration of the elastic wall 32, the lower part of the elastic wall 32 will be more prone to deformation. In this way, when the head portion 412 is passing between the pair of elastic walls 32, the deformation of the elastic wall 32 is uniformly distributed on the entire elastic wall 32 without focusing on the connection between the elastic wall 32 and the side wall 311, and the stress will also be uniformly distributed on the entire elastic wall 32 without being concentrated at the connection between the elastic wall 32 and the side wall 311. This is beneficial to reducing the resistance subjected by the insertion portion 41 when the insertion portion 41 is passing between the pair of elastic walls 32, and beneficial to avoiding damage to the connection between the elastic wall 32 and the side wall 311 due to excessive deformation.

It should be noted that, although in the above example each elastic wall 32 is provided with a cross-sectional shape of an arc which is convex outward, in other examples each elastic wall 32 may be provided with other form. For example, each elastic wall 32 may be provided with a cross-sectional shape of a flat line. For another example, each elastic wall 32 may be provided with a cross-sectional shape of an arc which is concave inward.

With continued reference to FIG. 8 and FIG. 17, a thickness of each elastic wall 32 may decrease while the elastic wall 32 extends downward.

According to this configuration of the elastic wall 32, the lower part of the elastic wall 32 will be more prone to deformation. In this way, when the head portion 412 is passing between the pair of elastic walls 32, the deformation of the elastic wall 32 will be evenly distributed on the entire elastic wall 32 without focusing on the connection between the elastic wall 32 and the side wall 311, and the stress will also be evenly distributed on the entire elastic wall 32 without being concentrated at the connection between the elastic wall 32 and the side wall 311. This is beneficial to reduce the resistance subjected by the insertion portion 41 when insertion portion 41 is passing between the pair of elastic walls 32, and is beneficial to avoiding damage to the connection between the elastic wall 32 and the side wall 311 due to excessive deformation.

Referring to FIG. 4 to FIG. 10, the female connector 30 may further include a plurality of coupling portion 33, the plurality of coupling portion 33 extend outward from an outer side surface of the main body portion 31, and/or the plurality of coupling portion 33 extend outward from outer side surfaces of the pair of elastic walls 32. In some examples, the plurality of coupling portion 33 may be disposed only on the outer side surface of the main body portion 31. In some examples, the plurality of coupling portion 33 may be disposed only on the outer side surfaces of the pair of elastic walls 32. In some examples, one or more coupling portions 33 may be disposed on the outer side surface of the main body portion 31, and another one or more coupling portions 33 may be disposed on outer side surfaces of the pair of elastic walls 32.

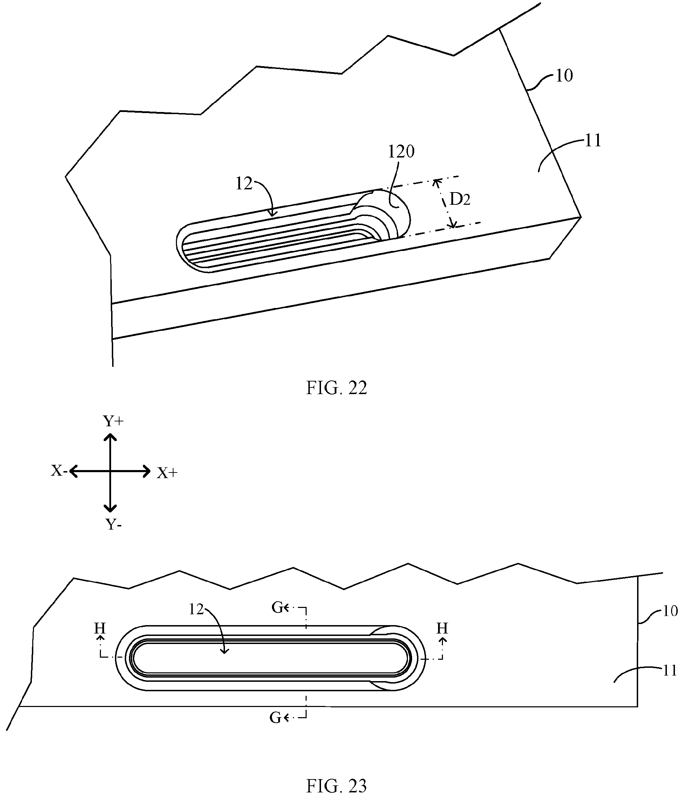

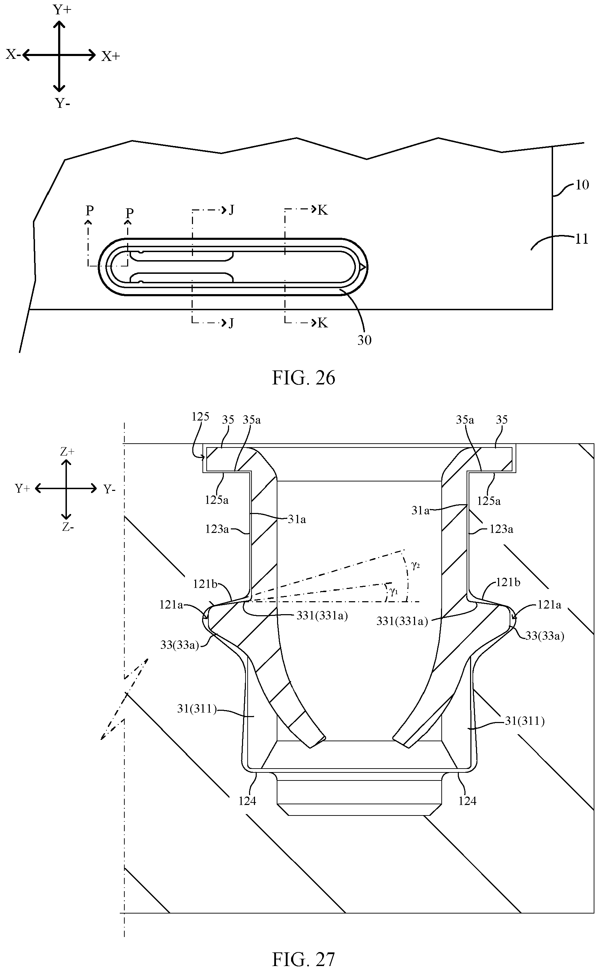

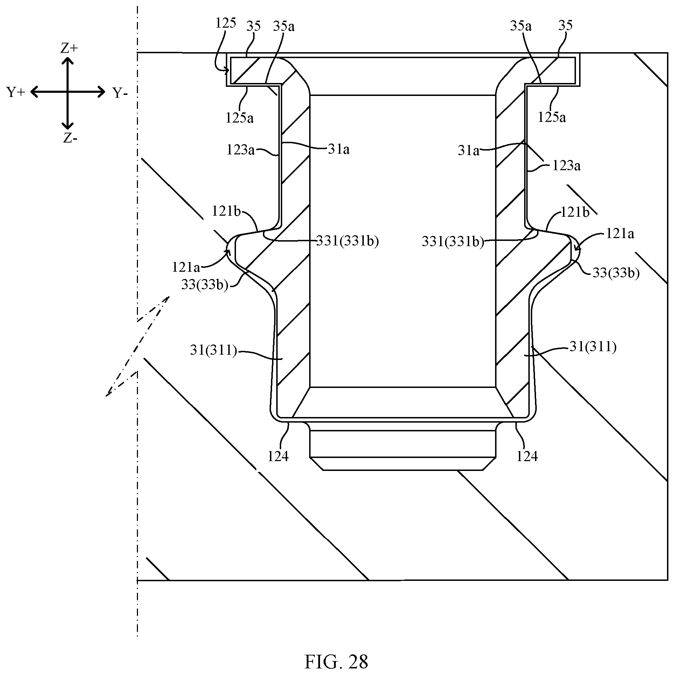

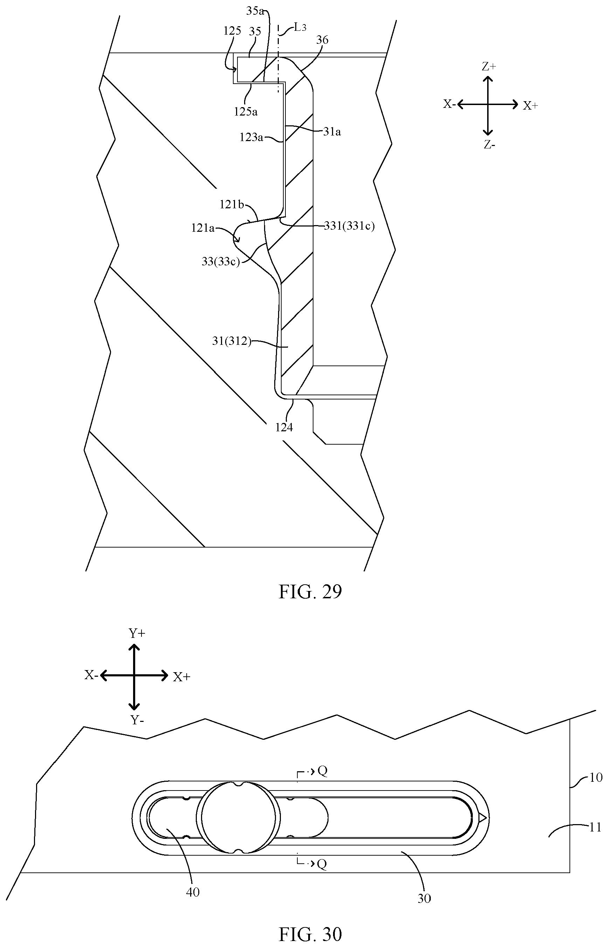

Referring to FIG. 22 to FIG. 25, the mounting groove 12 of the article 10 includes a coupling section 121. The coupling section 121 defines a coupling groove 121a recessed outward. Referring to FIG. 26 to FIG. 29, when the female connector 30 is mounted in the mounting groove 12, the plurality of coupling portions 33 are disposed in the coupling groove 121a to prevent the female connector 30 from being pulled upward out of the mounting groove 12.

In this way, the female connector 30 will be firmly fixed in the mounting groove 12.

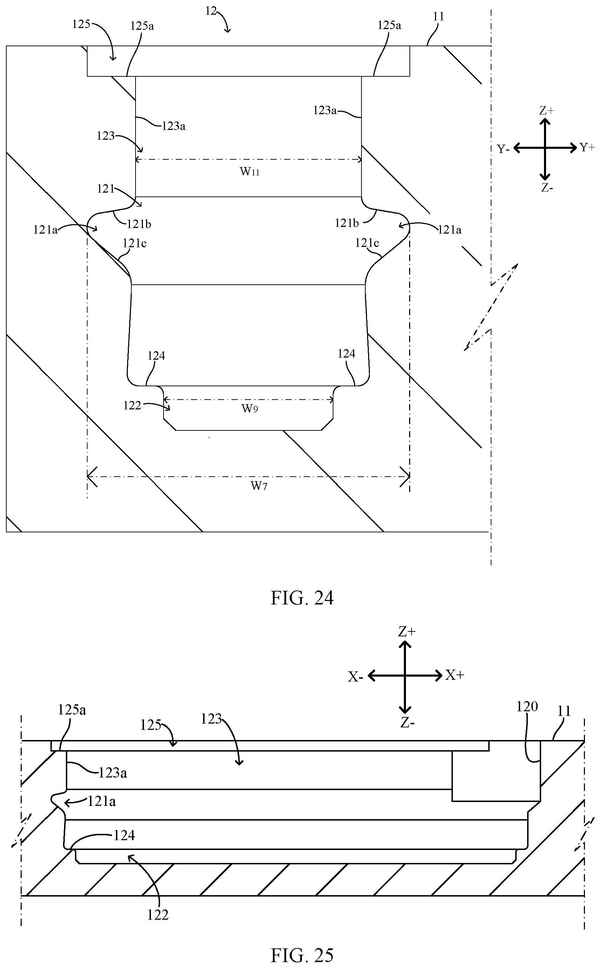

Referring to FIG. 8, FIG. 9 and FIG. 29, the upper side surface 331 of each coupling portion 33 is configured to extend outward while extending downward. Referring to FIG. 24, the coupling section 121 has a coupling surface 121b and a tapered surface 121c. The coupling surface 121b extends outward as the coupling surface 121b extends downward, and the tapered surface 121c extends inward while extending downward from the lower end of the coupling surface 121b, so as to form the coupling groove 121a outward recessed for receiving the plurality of coupling portions 33 of the female connector 30. Referring to FIG. 27 to FIG. 29, when the female connector 30 is mounted in the mounting groove 12, the upper side surface 331 of each coupling portion 33 faces the coupling surface 121b.

When the female connector 30 is subjected to an upward force, the upper side surface 331 of the coupling portion 33 presses the coupling surface 121b, and the coupling portion 33 applies a force to the inner side surface of the coupling groove 121a in an outward and upward inclined direction. Along the inclination direction, the distance from the coupling groove 121a to the upper surface 11 of the article 10 is larger, which enables the article 10 to bear a larger force in the inclined direction, thereby being beneficial to reducing the risk of damage to the article 10.

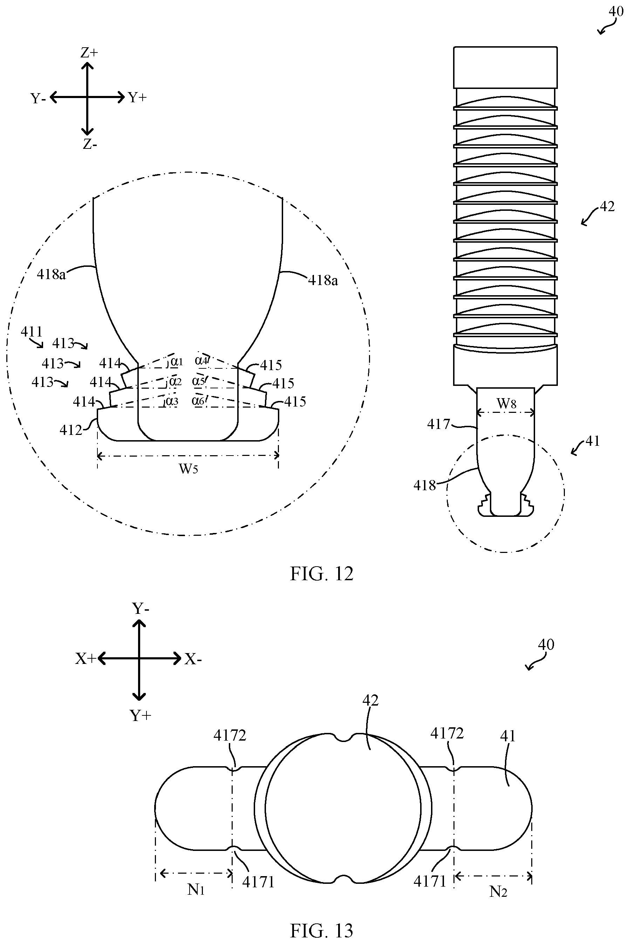

Referring to FIG. 4, FIG. 5, FIG. 7, and FIG. 8, the plurality of coupling portions 33 include a pair of first coupling portions 33a, the pair of first coupling portions 33a extend outward respectively from two outer side surfaces of the pair of elastic walls 32, the abutting end 321 of each elastic wall 32 has an end surface 322. Referring to FIG. 12, the abutting portion 411 has a pair of abutting surfaces 414,415. Referring to FIG. 8, FIG. 12, and FIG. 17, each of the abutting surfaces 414, 415 is configured to extend outward while extending downward, such that when the male connector 40 is mounted into the female connector 30, the two end surfaces 322 of the pair of abutting ends 321 abut against the pair of abutting surfaces 414, 415, respectively.

According to this configuration, when the end surface 322 of the abutting end 321 is pressed by the abutting surface, the abutting end 321 will bears an acting force in an outward and upward inclined direction. Since the first coupling portion 33a is located above the abutting end 321 and is located on the outer side surface of the abutting end 321, the acting force will be more transmitted to the first coupling portion 33a, and then transmitted to the article 10 through the first coupling portion 33a. Therefore, when the male connector 40 is subjected to an upward force, the elastic wall 32 will bear more compressive stress, which is beneficial to reducing the shear stress borne by the elastic wall 32, and is beneficial to reducing the deformation of the elastic wall 32, thereby improving the connection strength of the connection device and reducing the risk of damage to the elastic wall 32.

Referring to FIG. 17, when the male connector 40 is inserted into the female connector 30, an included angle ***β1*** ranges from 70 degrees to 100 degree, wherein the included angle ***β1*** is an included angle between the connecting line L1 from each abutting surface of the abutting surface 414, 415 to the outer end of the corresponding first coupling portion 33 and the abutting surface. In particular, the angle ***β1*** may range from 80 degrees to 90 degrees. It should be noted that the first coupling portion 33a extending outward from the outer side surface of one elastic wall 32 corresponds to an abutting surface abutting against the end surface 322 of the end surface 322 of the elastic wall 32.

The closer the included angle ***β1*** between the connecting line L1 and the abutting surface is to 90 degrees, the more the acting force borne by the abutting end 321 transmits to the first coupling portion 33a. By selecting the value range of ***β1*** within the above range, it ensures that the acting force borne by the abutting end 321 is more transmitted to the first coupling portion 33a, thereby reducing the shear stress borne by the elastic wall 32, reducing the deformation of the elastic wall 32, improving the connection strength of the connecting device, and reducing the risk of damage to the elastic wall 32.

Referring to FIG. 27, an included angle ***γ1*** between the upper surface 331a of each first coupling portion 33a and the reference plane is lower than an included angle ***γ2*** between the corresponding coupling surface 121b and the reference plane, and the reference plane is perpendicular to the height direction. It should be noted that although only the relationship between the coupling surface 121b as well as the upper surface 331a which are on the left side and the reference plane is shown in FIG. 27, the relationship between the coupling surface 121b as well as the upper surface 311a which are on the right side and the reference plane is also applicable to these descriptions.

According to this configuration, the outer end of the upper surface 331a of the first coupling portion 33a contacts the outer end of the coupling surface 121b, and the inner ends of the two are separated. Therefore, the coupling groove 121a will bear the acting force from the first coupling portion 33a through its root, which is beneficial to reducing the force arm, thereby reducing the risk of damage to the article 10.

Referring to FIG. 12, the abutting portion 411 includes a plurality of step portions 413. The plurality of step portions 413 are arranged in the downward direction. The plurality of step portions 413 have widths increasing in successive order in the downward direction. Each step portion is provided with a pair of abutting faces 414, 415 respectively on two opposite sides of the insertion portion 41 in the width direction.

This configuration provides an assembly margin so that manufacturing and assembly errors can be handled, avoiding connection failure of the male connector 40 and the female connector 30 when the accuracy of manufacturing and assembly is low.

With continued reference to FIG. 12, on each side of the insertion portion 41 in the width direction, the plurality of abutting surfaces of the plurality of step portions 413 respectively have a plurality of included angles relative to a reference plane perpendicular to the height direction. The plurality of included angles are decreased in successive order in the downward direction. Specifically, on the Y-side of the insertion portion 41 in the width direction, the plurality of abutting surfaces 414 of the plurality of step portions 413 respectively have the plurality of included angles ***α1,α2,α3*** relative to the reference plane, and the plurality of included angles ***α1, α2,α3*** decreases in successive order in the downward direction, that is, the included angle ***α1*** is greater than the included angle ***α2**,* and the included angle ***α2*** is greater than the included angle ***α3.*** On the Y+ side of the insertion portion 41 in the width direction, the plurality of abutting surfaces 415 of the plurality of step portions 413 respectively have the plurality of included angles ***α4,α5,α6*** relative to the reference plane, and the plurality of included angles ***α4,α5,α6*** decreases in successive order in the downward direction, that is, the included angle ***α4*** is greater than the included angle ***α5,*** and the included angle ***α5*** is greater than the included angle ***α6.***

According to this way, when the pair of abutting ends 321 abut against the pair of abutting faces 414, 415 of any one step portion 413, the two end surfaces 322 of the pair of abutting end 321 can abut against the abutting faces 414, 415 appropriately. In addition, according to this way, the connecting line from each abutting surface of any one step portion 413 and the outer end of the first coupling portion 33a can fall within a target range of 70 degrees to 100 degrees.

Referring to FIG. 4 to FIG. 10, the plurality of coupling portions 33 further include a pair of second coupling portions 33b, and the pair of second coupling portions 33b extend outward from two outer side surface of the pair of side walls 311, respectively.

In this way, the female connector 30 can be more firmly fixed in the mounting groove 12.

Referring to FIG. 4, FIG. 5, FIG. 7 and FIG. 10, the pair of first coupling portions 33a respectively correspond to the pair of second coupling portions 33b, and each first coupling portion 33a and a corresponding second coupling portion 33b are located on the same side of the female connector 30 in the width direction. Each first coupling portion 33a is substantially flush with the corresponding second coupling portion 33b in the height direction, and the first coupling portion 33a and the second coupling portion 33b are spaced apart in the length direction. For any one pair of first coupling portion 33a and second coupling portion 33b which are correspond to each other, an end portion 332a of the first coupling portion 33a away from the second coupling portion 33b gradually extends inward in a direction away from the second coupling portion 33b, and an end portion 332b of the second coupling portion 33b away from the first coupling portion 33a gradually extends inward in a direction away from the first coupling portion 33a.

According to this configuration, the female connector 30 can be relatively easily mounted into the mounting groove 12 and can be relatively easily removed from the mounting groove 12.

Referring to FIG. 4, FIG. 5 and FIG. 7, the female connector 30 further includes a pair of end walls 312, 313, the pair of end walls 312, 313 are respectively located at two opposite ends of the pair of side walls 311 in the length direction, and each one of the end walls 312,313 extends between the pair of side walls 311. The plurality of coupling portion 33 may further include at least one third coupling portion 33c, and the at least one third coupling portion 33c extends outward from an outer side surface of at least one end wall of the end walls 312, 313, respectively.

In this way, the female connector 30 can be more firmly fixed in the mounting groove 12.

Referring to FIG. 4 to FIG. 10, the pair of end walls 312, 313 includes a first end wall 312 and a second end wall 313, at least one third coupling portion 33c is a third coupling portion 33c, and the third coupling portion 33c extends outward from an outer side surface of the first end wall 312. The female connector 30 further includes a plurality of convex strip portions 34, and the plurality of convex strip portions 34 are disposed on an outer side surface of the second end wall 313. Outer side surfaces of the plurality of convex strip portions 34 together define a cylindrical surface, and a diameter ***D1*** of the cylindrical surface is greater than or equal to a maximum width ***W5*** of the pair of first coupling portion 33a, and is also greater than or equal to a maximum width ***W6*** of the pair of second coupling portion 33b. For example, the plurality of convex strip portions 34 extend in the height direction and are spaced apart in the circumferential direction. For another example, the plurality of convex strip portions 34 extend in the circumferential direction and are spaced apart in the height direction.

Referring to FIG. 22 to FIG. 25, an end surface 120 of the mounting groove 12 in the length direction is configured to a partial cylindrical surface 120, the partial cylindrical surface 120 extends downward from the upper surface 11 of the article 10 to the coupling section 121. A diameter ***D2*** of the partial the cylindrical surface 120 is greater than or equal to a width ***W7*** of the coupling groove 121a, and the coupling groove 121a extends from an edge of the partial cylindrical surface 120 to another edge of the partial cylindrical surface 120 in the circumferential direction.

According to the above way, in the process of making the mounting groove 12, the cutter may move downward at one end to obtain the end surface 120; and then, the cutter may move to the other end in the length direction; and then, the cutter may return to the place where the end surface 120 is located; and then, the cutter may move upward to go out of the mounting groove 12. In this way, the end surface of the mounting groove 12 opposite to the end surface 120 can be provided with a part of the coupling groove 121, and the coupling portion 33c can be provided on the outer side surface of the first end wall 312 of the main body portion 31, such that the structural strength of the article 10 can be improved. The diameter of the cylindrical surface defined by the plurality of convex strips 34 together is equal to the diameter of the end surface 120, thereby effectively preventing the female connector 30 from being mounted reversely.

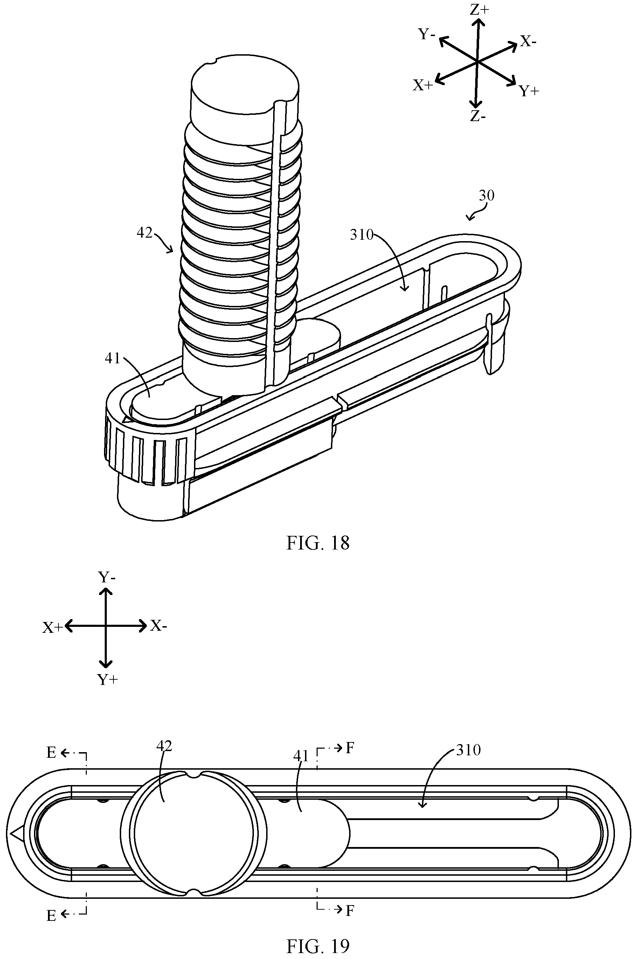

Referring to FIG. 15 to FIG. 21, the insertion groove 310 is configured to allow the insertion portion 41 to slide between a first position and a second position relative to the female connector 30 in the length direction. As shown in FIG. 15 to FIG. 17, when the insertion portion 41 is located at the first position, the pair of abutting ends 321 abut against the abutting portion 411. As shown in FIG. 18 to FIG. 21, when the insertion portion 41 is located at the second position, the pair of abutting ends 321 does not abut against the abutting portion 411, so as to allow the insertion portion 41 to be pulled out upward from the insertion groove 310.

According to this configuration, the purpose of disassembling the female connector 30 and the male connector 40 without damaging the female connector 30 and the male connector 40 is achieved, and two assembly ways are provided to adapt to different installation conditions.

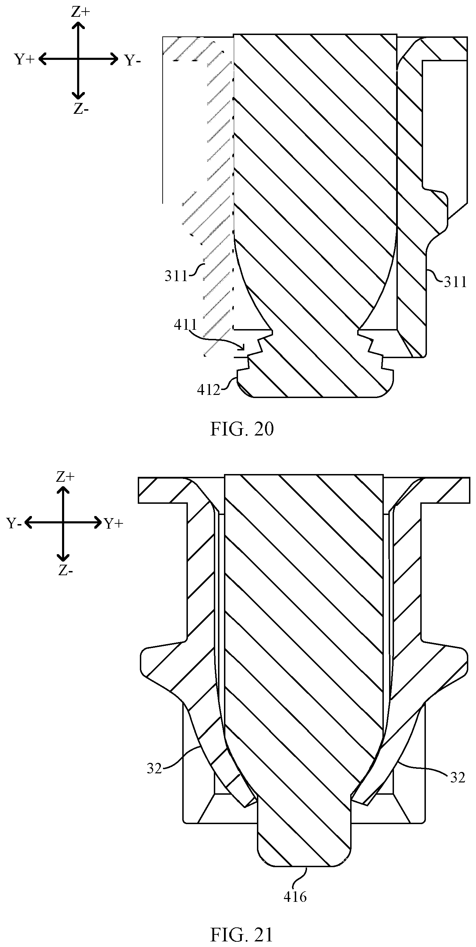

Referring to FIG. 11, FIG. 12 and FIG. 14, the insertion portion 41 further includes a widening portion 416. The widening portion 416 is located at one end of the insertion portion 41 in the length direction, and is connected to a whole of the abutting portion 411 and the head portion 412. Referring to FIG. 21, when the insertion portion 41 is located at the second position, the widening portion 416 presses the pair of abutting ends 321 apart away from each other. In an example, referring to FIG. 11 and FIG. 12, the insertion portion 41 may include a pair of widening portions 416, and the pair of widening portions 416 are respectively located at two ends of the insertion portion 41 in the length direction, so that the insertion portion 41 can be inserted into the insertion groove 310 in two postures, thereby improving the convenience of the assembly process.

When the insertion portion 41 is located at the second position, the widening portion 416 presses the pair of abutting ends 321 apart away from each other. In this way, during the process of sliding the insertion portion 41 from the second position to the first position, the elastic walls 32 will less be pressed in the length direction, so that the risk that the elastic wall 32 is pressed to be damaged can be reduced.

Referring to FIG. 9, FIG. 11 and FIG. 12, the insertion portion 41 further includes a support portion 417 located above the abutting portion 411, and a width ***W8*** of the support portion 417 is greater than or substantially equal to a distance ***W4*** between two inner side surfaces of the pair of side walls 311.

According to this configuration, after the insertion portion 41 is inserted into the insertion groove 310, the two side surfaces of the support portion 417 in the width direction will be tightly attached to the two inner side surfaces of the pair of side walls 311, so that the support portion 417 is reliably supported, which is beneficial to improving the strength of the connection and preventing the insertion portion 41 from shaking in the width direction, thereby improving the connection strength.

Referring to FIG. 4 to FIG. 6 and FIG. 8, a pair of convex ribs 314 are respectively provided on two inner side surfaces of the pair of side walls 311, each convex rib 314 extends in the height direction, and the pair of convex ribs 314 are directly opposite each other. Referring to FIG. 11 to FIG. 13, the support portion 417 is provided with a pair of grooves 4171,4172 each of which extends in the height direction, the pair of grooves 4171,4172 are respectively disposed on two opposite side surfaces of the support portion 417 in the width direction, and the pair of grooves 4171,4172 are directly opposite each other. Referring to FIG. 16, when the insertion portion 41 is located at the first position, the pair of grooves 4171,4172 respectively receive the pair of convex ribs 314.

This configuration can prevent the insertion portion 41 from accidentally moving from the first position to the second position. In addition, this configuration can provide sensory feedback to the user, so that the user can know whether the insertion portion 41 reaches the first position.

Referring to FIG. 16, a dimension of each one of the grooves 4171,4172 in the length direction are larger than a dimension of a corresponding convex rib 314 (that is, the convex rib 314 received by the one of the grooves 4171,4172) in the length direction. This configuration can provide sensory feedback to the user so that the user can know whether the insertion portion 41 reaches the first position.

Referring to FIG. 11 to FIG. 13, the insertion portion 41 may be provided with two pairs of grooves 4171,4172, and the two pairs of grooves 4171,4172 are arranged at an interval in the length direction. A distance from one pair of grooves 4171,4172 to one end of the insertion portion 41 is ***N1,*** wherein the one pair of grooves 4171,4172 is closer to the one end than another pair of grooves 4171,4172 in the length direction. A distance from another pair of grooves 4171,4172 to another end of the insertion portion 41 is ***N2***, wherein the another pair of grooves 4171,4172 is closer to the another end than the one pair of grooves 4171,4172. The distance ***N1*** is equal to the distance ***N2.***

In this way, the insertion portion 41 can be inserted into the insertion groove 310 in two postures, thereby improving the convenience of the assembly process.

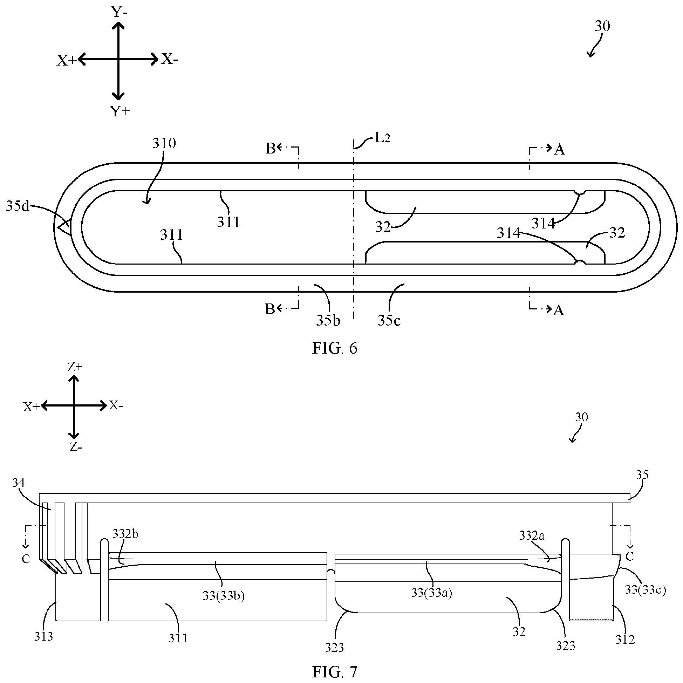

Referring to FIG. 6, the upper surface of the female connector 30 includes a first surface portion 35b and a second surface portion 35c which are arranged in the length direction and connected to each other. To facilitate differentiation, the first surface portion 35b and the second surface portion 35c are separated by an imaginary line L2 in FIG. 6. The first surface portion 35b and the second surface portion 35c are configured to have different roughness, color, texture, or pattern that enable them to be distinguished. For example, the first surface portion 35b is provided with an identifier 35d, and the second surface portion 35c is not provided with the identifier 35d. For other example, the first surface portion 35b is relatively rough, and the second surface portion 35c is relatively smooth to produce a visual effect difference. For other example, the first surface portion 35b and the second surface portion 35c may have different colors via a double-color injection molding manner. In an example, the first surface portion 35b and the second surface portion 35c may be part of an upper surface of the skirt portion 35. The skirt portion 35 will be described in detail below.

Based on the difference between the first surface portion 35b and the second surface portion 35c, the user can accurately determine which one of the first position and the second position the insertion portion 41 is located at.

Referring to FIG. 11 and FIG. 12, the insertion portion 41 may further include a fitting portion 418 located above the abutting portion 411, and the fitting portion 418 is configured that the width thereof gradually decreases in the downward direction. That is, the distance between the two opposite sides 418a of the fitting portion 418 in the width direction gradually decreases in the downward direction. Referring to FIG. 17, when the male connector 40 is inserted into the insertion groove 310 of the female connector 30 and is located at the first position, a pair of inner side surfaces of the pair of elastic walls 32 are respectively tightly attached to the two side surfaces 418a of the fitting portion 418.

According to this configuration, after the insertion portion 41 is inserted into the insertion groove 310, the two side surfaces of the fitting portion 418 in the width direction will be tightly attached to the two inner side surfaces of the pair of elastic walls 32, so that the fitting portion 418 is reliably supported, which is beneficial to improve the strength of the connection and prevent the insertion portion 41 from shaking in the width direction, thereby improving the connection strength. In addition, the fitting portion 418 having this configuration can provide support for the elastic walls 32, so as to prevent connection failure or damage due to excessive inward deformation when the elastic walls 32 are pressed.

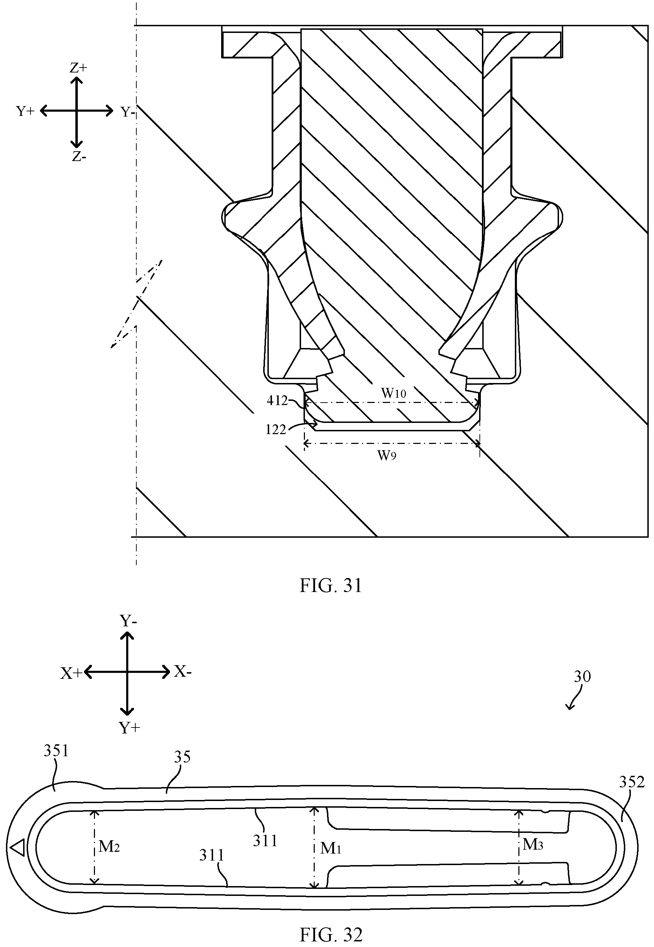

Referring to FIG. 24 and 25, the mounting groove 12 includes a support section 122 (that is, a first support section). For example, the support section 122 may be located below the coupling section 121. Referring to FIG. 31, when the insertion portion 41 is inserted into the insertion groove 310, the head portion 41 is inserted into the support section 122. Herein, a width ***W9*** of the support section 122 is substantially equal to a width ***W10*** of the head portion 412. For example, ***W9*** may range from 0.9 times ***W10*** to 1.1 times ***W10.***

According to this configuration, after the insertion portion 41 is inserted into the insertion groove 310, the two side surfaces of the head portion 412 in the width direction will be tightly attached to a pair of inner side surfaces of the support section 122 in the width direction, so that the head portion 412 is reliably supported, which is beneficial to improve the strength of the connection and prevent the insertion portion 41 from shaking in the width direction, thereby improving the connection strength.

Referring to FIG. 24 and FIG. 25, the mounting groove 12 includes a support section 123 (that is, a second support section), the support section 123 is located above the coupling section 121, the coupling section 121 is located above the support section 122, and a width ***W11*** of the support section 123 is greater than the width ***W9*** of the support section 122.

According to this configuration, after the insertion portion 41 is inserted into the insertion groove 310, the two side surfaces of the head portion 412 in the width direction will be tightly attached to the pair of inner side surfaces of the support section 122 in the width direction, so that the head portion 412 is reliably supported, which is beneficial to improve the strength of the connection and prevent the insertion portion 41 from shaking in the width direction, thereby improving the connection strength. The support section 123 will be used to support an outer side surface of the main body portion 31 of the female connector 30.

Referring to FIG. 24 and FIG. 25, the mounting groove 12 is further provided with a support surface 124 (that is, a first support surface), the support surface 124 is located above the support section 122, and the support surface 124 extends outward in a direction which is substantially perpendicular to the height direction. Referring to FIG. 27 to FIG. 29, when the female connector 30 is mounted into the mounting groove 12, a lower end of a part of the main body 31 is supported by the support surface 124.

According to this configuration, the female connector 30 will be better supported in the height direction, so as to prevent the female connector 30 from sliding down by being excessively pressed when the insertion portion 41 is inserted into the insertion groove 310. If the female connector 30 slides down excessively, it may cause the female connector 30 to be pressed by the insertion portion 41 and be damaged, or the pair of abutting ends 321 cannot abut against the abutting portion 411.

Referring to FIG. 4 to FIG. 9, the female connector 30 further includes a skirt portion 35. The skirt portion 35 is located at the upper end of the main body 31, and extends outward from the outer side surface 31a of the main body 31. Referring to FIG. 24 and 25, the mounting groove 12 includes a receiving section 125 which is located at an upper end of the mounting groove 12, and the receiving section 125 is recessed outward beyond the first support section 123. Referring to FIG. 27 to FIG. 29, when the female connector 30 is mounted in the mounting groove 12, the receiving section 125 receives the skirt portion 35.

According to this configuration, the female connector 30 will be better supported in the height direction, so as to prevent the female connector 30 from sliding down by being excessively pressed when the insertion portion 41 is inserted into the insertion groove 310. If the female connector 30 slides down excessively, it may cause the female connector 30 to be pressed by the insertion portion 41 and be damaged, or the pair of abutting ends 321 cannot abut against the abutting portion 411.

Referring to FIG. 8, FIG. 9 and FIG. 29, the outer side surface 31a of the main body portion 31 extends in the height direction, and the lower surface 35a of the skirt portion 35 extends outward from the upper end of the outer side surface 31a of the main body portion 31 in a direction which is substantially perpendicular to the height direction. That is, the lower surface 35a of the skirt portion 35 is connected to the outer side surface 31a of the main body portion 31, and there is no chamfer or rounded corner at the connection between the two. Referring to FIG. 24 and FIG. 25, the inner side surface 123a of the support section 123 extends in the height direction, and the bottom surface 125a of the receiving section 125 extends outward from the upper end of the inner side surface 123a of the support section 123 in a direction which is substantially perpendicular to the height direction. That is, the bottom surface 125a of the receiving section 125 is connected to the inner side surface 123a of the support section 123, and there is no chamfer or rounded corner at the connection between the two. Referring to FIG. 27 to FIG. 29, when the female connector 30 is mounted in the mounting groove 12, the lower surface 35a of the skirt portion 35 faces the bottom surface 125a of the receiving section 125, and at least part of the outer side surface 31a of the main body 31 faces the inner side surface 123a of the support section 123.

According to this configuration, the female connector 30 will be better supported in the height direction, so as to prevent the female connector 30 from sliding down by being excessively pressed when the insertion portion 41 is inserted into the insertion groove 310. If the female connector 30 slides down excessively, it may cause the female connector 30 to be pressed by the insertion portion 41 and be damaged, or the pair of abutting ends 321 cannot abut against the abutting portion 411.

Referring to FIG. 8, FIG. 9 and FIG. 29, the skirt portion 35 and the main body portion 31 together define a guide surface 36, the guide surface 36 extends inward in the downward direction from the upper side surface of the skirt portion 35 to the inner side surface of the main body portion 31, and the upper edge of the guide surface 36 is located further outward than the outer side surface 31a of the main body portion 31. It can be seen from FIG. 8, FIG. 9 and FIG. 29 that the imaginary limit L3 extending through the upper edge of the guide surface 36 and extending in the height direction is located further outward than the outer side surface 31a of the main body portion 31.

In the process of inserting the insertion portion 41 into the insertion groove 310, it is difficult to ensure that the insertion portion 41 is accurately aligned with the insertion groove 310. By means of the guide surface 36, even if the insertion portion 41 and the insertion groove 310 are not accurately aligned, the guide surface 36 can guide the insertion portion 41 moving downward into the insertion groove 310. Since the upper edge of the guide surface 36 is located further outward than the outer side surface 31a of the main body portion 31, when the insertion portion 41 is pressed and locates outside the guide surface 36, it is difficult to insert the insertion portion 41 into the insertion groove 310 even a relatively large force is used. In this way, after the user senses that it is difficult to insert the insertion portion 41 into the insertion groove 310, the user will adjust the positions of the two. If the upper edge of the guide surface 36 is located further inward than the outer side surface 31a of the main body part 31, when the insertion portion 41 is pressed outside the guide surface 36, the user can insert the insertion portion 41 into the insertion groove 310 by using a relatively large force. This causes the user to tend to use a greater force to assemble both, which may result in damage to the female connector 30.

Referring to FIG. 7, two bottom corners 323 of each elastic wall 32 are provided with rounded corners.

In the process of inserting the insertion portion 41 into the insertion groove 310, the two bottom corners 323 of the pair of elastic walls 32 are easily damaged. The inventors have found that: when the abutting end 321 of the elastic walls 32 are exceed the head portion 412 (or exceed a plurality of step portions 413), there is generate larger impact, which may result in damage to the two bottom corners 323. Through careful research, it is found that the two bottom corners 323 configured as the rounded corners can help to effectively solve this problem.

Referring to FIG. 32, in the various example 1, a distance between the pair of side walls 311 gradually increases while the pair of side walls 311 extends towards the middle of the pair of side walls 311 in the length direction. For example, the distance ***M1*** between the pair of side walls 311 closer to the middle portion is greater than the distance ***M2*** and the distance ***M3*** closer to an end portion.

The female connector 30 is typically an injection molded member. Such injection molded member typically contract after demolding. If the female connector 30 contracts after demolding, the pair of side walls 311 will be recessed inward. If the pair of side walls 311 are recessed inward, the outer side surfaces of the pair of side walls 311 cannot be supported by the inner side surface of the mounting groove 12, and the coupling portions 33 are prone to remove from the coupling groove 121a, so that the female connecting piece 30 is prone to remove from the mounting groove 12. In addition, if the pair of side walls 311 are recessed inward, the pair of side walls 311 are prone to damage by downward pressing of the insertion portion 41 during inserting of the insertion portion 41 into the insertion groove 310.

Referring to FIG. 32, in various Example 1, two sizes of two end portions 351, 352 of the skirt portion 35 are different, wherein the two end portions 351, 352 are the two opposite ends in the long direction. That is, a diameter of the end portion 351 is greater than a diameter of the end portion 352.

This configuration of the skirt portion 35 provides visual differences, so that the user can accurately determine which one of the first position and the second positions the insertion portion 41 is located at.

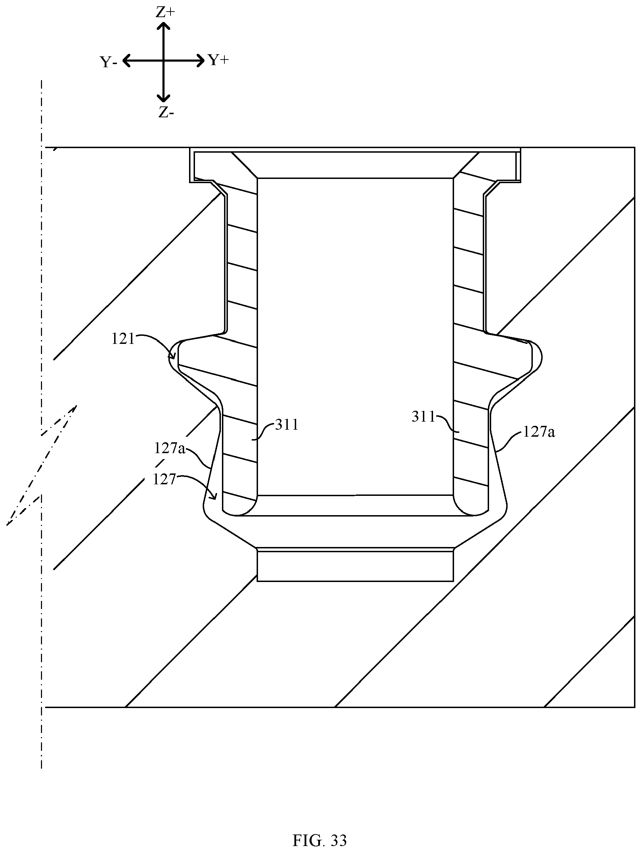

Referring to FIG. 33, in the various example 2, the mounting groove 12 further includes an extension section 127 located below the coupling section 121, the extension section 127 has an avoidance surface 127a, and the avoidance surface 127a is configured to extend outward in the downward direction.

In some cases, at the bottom of the mounting groove 12, debris may enter the gap between the inner side surface and the side wall 311. Debris may cause the lower end of the side wall 311 to deform inward. When the insertion portion 41 is located at the second position, the lower end of the side wall 311 deformed inward may abut against the abutting portion 411, so that the insertion portion 41 cannot be pulled out of the insertion groove 310. In the above way, the extension section 127 according to the present disclosure provides a space for receiving debris, thereby effectively preventing the lower end of the side wall 311 from deforming inward due to the debris, and further avoiding the occurrence of the above-mentioned undesirable situation.

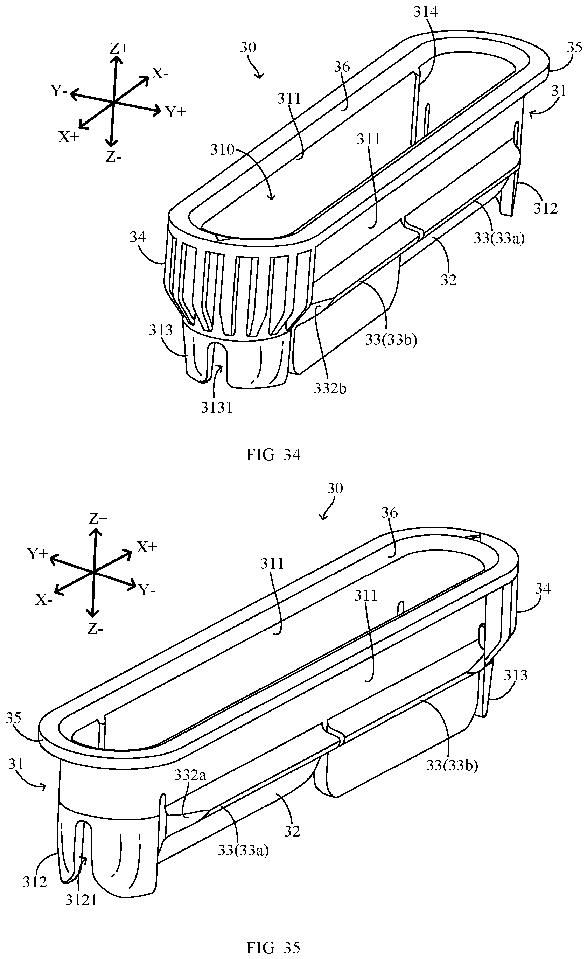

Referring to FIG. 34 and 35, in various example 3, the outer surface of each one of the pair of end walls 312, 313 tapers inward in the downward direction. According to the outer surface having this configuration, in the process of mounting the female connector 30 into the mounting groove 12 of the article 10, the female connector 30 can smoothly enter the mounting groove 12, thereby reducing the risk that the female connector 30 is damaged due to the excessive squeeze.

With continued reference to FIG. 34 and FIG. 35, in various Example 3, each one of the pair of end walls 312,313 is further provided with a notch, that is, the end wall 312 is provided with a notch 3121, and the end wall 313 is provided with a notch 3131. According to the notches 3121,3131, in the process of mounting the female connector 30 into the mounting groove 12 of the article 10, the elastic deformation of the end walls 312, 313 can be larger, which can help the female connector 30 to smoothly enter the mounting groove 12, thereby reducing the risk of damage caused by excessive extrusion of the female connector 30.

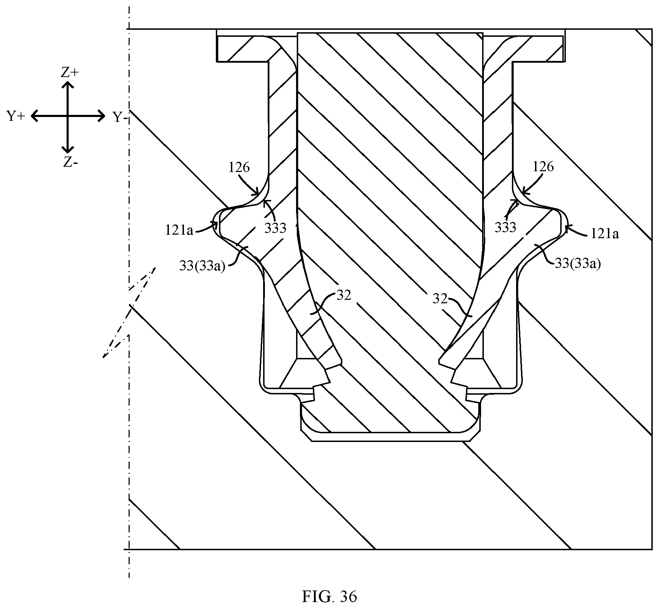

Referring to FIG. 36, in the various example 4, the upper side of the first coupling portion 33a may be provided with a first rounded corner portion 333 recessed inward, and the upper side of the coupling groove 121a is provided with a second rounded corner portion 126 that is convex outward. The first rounded corner portion 333 directly faces the second rounded corner portion 126. In other words, the second rounded corner portion 126 is located at a position fit to the first rounded corner portion 333. A radius of the first rounded corner portion 333 is smaller than a radius of the second rounded corner portion 126, so as to avoid direct contact between the first rounded corner portion 333 and the second rounded corner portion 126, which is beneficial to reduce the risk of accidental damage to the female connector 30 at the first rounded corner portion 333.

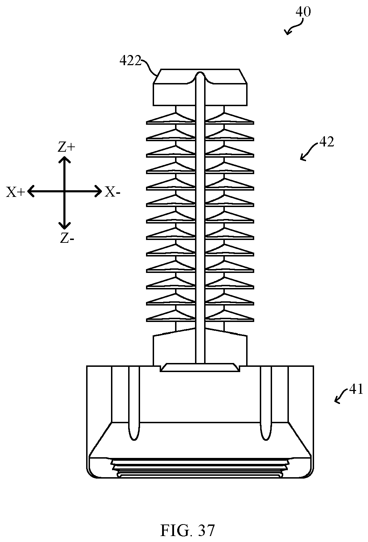

Referring to FIG. 37, in the various example 5, the upper end of the fixing portion 42 of the male connector 40 may be provided with a chamfer. In the process of mounting the fixing part 42 into the mounting groove 22 of the article 20, the chamfer can help the fixing part 42 to smoothly enter the mounting groove 22.

It should be understood that the terms "including" and variations thereof used in the present disclosure are open inclusion, that is, "including but not limited to". The term "according to" is " at least partly according to ". The term "one embodiment" means "at least one embodiment"; the term "another embodiment" means "at least one other embodiment".

It should be understood that, although the terms "first" or "second" and the like may be used in the present disclosure to describe various elements (such as a first article and a second article), these elements are not provided by these terms, and these terms are only used to distinguish one element from another.

The scope of protection of the present disclosure is not limited to the above embodiments, and any person skilled in the art can conceive of changing or replacing within the technical scope disclosed in the present disclosure, and should be covered within the protection scope of the present disclosure. Therefore, the protection scope of the present disclosure shall be subject to the protection scope of the claims.

## Claims

1. A female connector (30), configured to be fixed to a first article (10) and be coupled to a male connector (40) fixed to a second article (20), so as to connect the first article (10) to the second article (20), wherein the female connector (30) comprises:
a main body portion (31), comprising a pair of side walls (311) , each side wall (311) extending in the length direction, and the pair of side walls (311) being spaced apart in a width direction to define, between the pair of side walls (311), an insertion groove (310) for an insertion portion (41) of the male connector (40) to be inserted, and the insertion portion (41) comprising, downward in sequence, an abutting portion (411) and a head portion (412); and
a pair of elastic walls (32), extending downward and inward respectively from the pair of side walls (311) to respectively form a pair of abutting ends (321) extending in the insertion groove (310), wherein the pair of elastic walls (32) are configured to be capable of elastically deforming outward when the pair of elastic walls (32) are pressed outward by the head portion (412) inserted in downward, such that the pair of abutting ends (321) allow the head portion (412) to pass between the pair of abutting ends (321), and can abut against the abutting portion (411) after the head portion (412) has passed between the pair of abutting ends (321) so as to prevent the head portion (412) from being pulled out upward;
the insertion groove (310) is configured to allow the insertion portion (41) to slide between a first position and a second position relative to the female connector (30) in the length direction in the insertion groove (310), such that when the insertion portion (41) is located at the first position, the pair of abutting ends (321) abut against the abutting portion (411), and when the insertion portion (41) is located at the second position, the pair of abutting ends (321) does not abut against the abutting portion (411), so as to allow the insertion portion (41) to be pulled out upwards from the insertion groove (310).

2. The female connector (30) according to claim 1, wherein each elastic wall (32) has a cross section shape of an arc which is convex outward.

3. The female connector (30) according to claim 2, wherein a curvature of each elastic wall (32) increases downward, and/or a thickness of each elastic wall (32) decreases downward.

4. The female connector (30) according to claim 1, wherein the female connector (30) further comprises a plurality of coupling portions (33), and the plurality of coupling portions (33) extends outward from an outer side surface of the main body portion (31) and/or extends outward from two outer side surfaces of the pair of elastic walls (32).

5. The female connector (30) according to claim 4, wherein an upper side surface (331) of each coupling portion (33) extends outward while extending downward.

6. The female connector (30) according to claim 4 or claim 5, wherein the plurality of coupling portions (33) comprise a pair of first coupling portions (33a), the pair of first coupling portions (33a) extend outward from the two outer side surfaces of the pair of elastic walls (32) respectively, and an end surface of each abutting end (321) extends outward while extending downward.

7. The female connector (30) according to claim 6, wherein the plurality of coupling portions (33) further comprises a pair of second coupling portions (33b), and the pair of second coupling portions (33b) extend outward respectively from two outer side surfaces of the pair of side walls (311).

8. The female connector (30) according to claim 7, wherein each first coupling portion (33a) and a corresponding second coupling portion (33b) are located on a same side of the female connector (30) in the width direction, the first coupling portion (33a) and the second coupling portion (33b) are substantially flush in a height direction and are spaced apart from each other in a length direction, an end portion (332a), of the first coupling portion (33a), away from the second coupling portion (33b) gradually extends inward while extending away from the second coupling portion (33b) in the length direction, and an end portion (332b), of the second coupling portion (33b), away from the first coupling portion (33a) gradually extends inward while extending away from the first coupling portion (33a) in the length direction.

9. The female connector (30) according to claim 4 or claim 5, wherein the female connector (30) further comprises a pair of end walls (312,313), the pair of end walls (312,313) are respectively located at two ends of the pair of side walls (311) in a length direction, each end wall extends between the pair of side walls (311), the pair of end walls (312,313) comprises a first end wall (312) and a second end wall (313), the plurality of coupling portions (33) further comprise a third coupling portion (33c), the third coupling portion (33c) extends outward respectively from an outer side surface of the first end wall (312), an outer side surface of the second end wall (313) is provided with a plurality of convex strip portions (34), and outer side surfaces of the plurality of convex strip portions (34) together define a cylindrical surface.

10. The female connector (30) according to claim 1, wherein the female connector (30) further comprises a skirt portion (35) which is located at an upper end of the main body portion (31) and extends outward from an outer side surface of the main body portion (31).

11. The female connector (30) according to claim 10, wherein the skirt portion (35) and the main body portion (31) together define a guide surface (36), the guide surface (36) extends inward while extending downward from an upper side surface of the skirt portion (35) to an inner side surface of the main body portion (31), and an upper edge of the guide surface (36) is located further outward than the outer side surface of the main body portion (31).

12. A male connector (40), configured to be coupled to the female connector (30) according to claim 1 fixed to a first article (10), so as to connect a second article (20) fixed to the male connector (40) to the first article (10), wherein the male connector (40) comprises an insertion portion (41), the insertion portion (41) comprises, downward in sequence, an abutting portion (411) and a head portion (412); the head portion (412) can press, by inserting downward into the insertion groove (310) of the female connector (30), the pair of elastic walls (32) of the female connector (30) to make the pair of elastic walls (32) elastically deform outward, such that the pair of abutting ends (321) of the pair of elastic walls (32) allow the head portion (412) to pass through the pair of abutting ends (321), and can abut against the abutting portion (411) after the head portion (412) has passed through the pair of abutting ends (321) so as to prevent the head portion (412) from being pulled out upward, the abutting portion (411) comprises a plurality of step portions (413) arranged in a downward direction, **characterised in that** the plurality of step portions (413) have widths increasing in successive order in the downward direction, each step portion (413) is provided with a pair of abutting surfaces (414,415), and the pair of abutting surfaces (414,415) are respectively located on two opposite sides of the abutting portion (411) in the width direction.

13. The male connector (40) according to claim 12, wherein each abutting surface extends outward while extending downward.

## Patentansprüche

1. Ein Aufnahmeverbindungsteil (30), das konfiguriert ist, um an einem ersten Artikel (10) befestigt zu werden und mit einem Einsteckverbindungsteil (40) gekoppelt zu werden, das an einem zweiten Artikel (20) befestigt ist, um den ersten Artikel (10) mit dem zweiten Artikel (20) zu verbinden, wobei das Aufnahmeverbindungsteil (30) Folgendes beinhaltet:
einen Hauptkörperabschnitt (31), der ein Paar Seitenwände (311) beinhaltet, wobei sich jede Seitenwand (311) in der Längsrichtung erstreckt und das Paar Seitenwände (311) in einer Breitenrichtung voneinander beabstandet ist, um zwischen dem Paar Seitenwände (311) eine Einführnut (310) für einen Einführabschnitt (41) des einzuführenden Einsteckverbindungsteils (40) zu definieren, und wobei der Einführabschnitt (41) in Abwärtsrichtung nacheinander einen anliegenden Abschnitt (411) und einen Kopfabschnitt (412) beinhaltet; und
ein Paar elastische Wände (32), die sich jeweils von dem Paar Seitenwände (311) nach unten und nach innen erstrecken, um jeweils ein Paar anliegende Enden (321) zu bilden, die sich in die Einführnut (310) erstrecken, wobei das Paar elastische Wände (32) konfiguriert ist, um sich elastisch nach außen verformen zu können, wenn das Paar elastische Wände (32) durch den nach unten eingeführten Kopfabschnitt (412) nach außen gedrückt wird, sodass das Paar anliegende Enden (321) es dem Kopfabschnitt (412) ermöglicht, zwischen dem Paar anliegende Enden (321) hindurchzugehen, und gegen den anliegenden Abschnitt (411) anliegen kann, nachdem der Kopfabschnitt (412) zwischen dem Paar anliegende Enden (321) hindurchgegangen ist, um zu verhindern, dass der Kopfabschnitt (412) nach oben herausgezogen wird; wobei die Einführnut (310) konfiguriert ist, um es dem Einführabschnitt (41) zu ermöglichen, zwischen einer ersten Position und einer zweiten Position relativ zu dem Aufnahmeverbindungsteil (30) in der Längsrichtung in der Einführnut (310) zu gleiten, sodass, wenn sich der Einführabschnitt (41) an der ersten Position befindet, das Paar anliegende Enden (321) gegen den anliegenden Abschnitt (411) anliegt, und wenn sich der Einführabschnitt (41) an der zweiten Position befindet, das Paar anliegende Enden (321) nicht gegen den anliegenden Abschnitt (411) anliegt, um es dem Einführabschnitt (41) zu ermöglichen, nach oben aus der Einführnut (310) herausgezogen zu werden.

2. Aufnahmeverbindungsteil (30) gemäß Anspruch 1, wobei jede elastische Wand (32) eine Querschnittsform eines Bogens aufweist, der nach außen konvex ist.

3. Aufnahmeverbindungsteil (30) gemäß Anspruch 2, wobei eine Krümmung jeder elastischen Wand (32) nach unten zunimmt und/oder eine Dicke jeder elastischen Wand (32) nach unten abnimmt.

4. Aufnahmeverbindungsteil (30) gemäß Anspruch 1, wobei das Aufnahmeverbindungsteil (30) ferner eine Vielzahl von Kopplungsabschnitten (33) beinhaltet und sich die Vielzahl von Kopplungsabschnitten (33) von einer äußeren Seitenfläche des Hauptkörperabschnitts (31) nach außen erstreckt und/oder sich von zwei äußeren Seitenflächen des Paars elastischer Wände (32) nach außen erstreckt.

5. Aufnahmeverbindungsteil (30) gemäß Anspruch 4, wobei sich eine obere Seitenfläche (331) jedes Kopplungsabschnitts (33) nach außen erstreckt, während sie sich nach unten erstreckt.

6. Aufnahmeverbindungsteil (30) gemäß Anspruch 4 oder Anspruch 5, wobei die Vielzahl von Kopplungsabschnitten (33) ein Paar erste Kopplungsabschnitte (33a) beinhaltet, sich das Paar erste Kopplungsabschnitte (33a) jeweils von den zwei äußeren Seitenflächen des Paars elastischer Wände (32) nach außen erstreckt und sich eine Endfläche jedes anliegenden Endes (321) nach außen erstreckt, während sie sich nach unten erstreckt.

7. Aufnahmeverbindungsteil (30) gemäß Anspruch 6, wobei die Vielzahl von Kopplungsabschnitten (33) ferner ein Paar zweite Kopplungsabschnitte (33b) beinhaltet und sich das Paar zweite Kopplungsabschnitte (33b) jeweils von zwei äußeren Seitenflächen des Paars Seitenwände (311) nach außen erstreckt.

8. Aufnahmeverbindungsteil (30) gemäß Anspruch 7, wobei sich jeder erste Kopplungsabschnitt (33a) und ein entsprechender zweiter Kopplungsabschnitt (33b) auf einer gleichen Seite des Aufnahmeverbindungsteils (30) in der Breitenrichtung befinden, der erste Kopplungsabschnitt (33a) und der zweite Kopplungsabschnitt (33b) in einer Höhenrichtung im Wesentlichen bündig sind und in einer Längsrichtung voneinander beabstandet sind, sich ein Endabschnitt (332a) des ersten Kopplungsabschnitts (33a) von dem zweiten Kopplungsabschnitt (33b) weg allmählich nach innen erstreckt, während er sich von dem zweiten Kopplungsabschnitt (33b) in der Längsrichtung weg erstreckt, und sich ein Endabschnitt (332b) des zweiten Kopplungsabschnitts (33b) von dem ersten Kopplungsabschnitt (33a) weg allmählich nach innen erstreckt, während er sich von dem ersten Kopplungsabschnitt (33a) in der Längsrichtung weg erstreckt.

9. Aufnahmeverbindungsteil (30) gemäß Anspruch 4 oder Anspruch 5, wobei das Aufnahmeverbindungsteil (30) ferner ein Paar Endwände (312, 313) beinhaltet, sich das Paar Endwände (312, 313) jeweils an zwei Enden des Paars Seitenwände (311) in einer Längsrichtung befindet, sich jede Endwand zwischen dem Paar Seitenwände (311) erstreckt, das Paar Endwände (312, 313) eine erste Endwand (312) und eine zweite Endwand (313) beinhaltet, die Vielzahl von Kopplungsabschnitten (33) ferner einen dritten Kopplungsabschnitt (33c) beinhaltet, sich der dritte Kopplungsabschnitt (33c) jeweils von einer äußeren Seitenfläche der ersten Endwand (312) nach außen erstreckt, eine äußere Seitenfläche der zweiten Endwand (313) mit einer Vielzahl von konvexen Streifenabschnitten (34) versehen ist und äußere Seitenflächen der Vielzahl von konvexen Streifenabschnitten (34) zusammen eine zylindrische Fläche definieren.

10. Aufnahmeverbindungsteil (30) gemäß Anspruch 1, wobei das Aufnahmeverbindungsteil (30) ferner einen Kragenabschnitt (35) beinhaltet, der sich an einem oberen Ende des Hauptkörperabschnitts (31) befindet und sich von einer äußeren Seitenfläche des Hauptkörperabschnitts (31) nach außen erstreckt.

11. Aufnahmeverbindungsteil (30) gemäß Anspruch 10, wobei der Kragenabschnitt (35) und der Hauptkörperabschnitt (31) zusammen eine Führungsfläche (36) definieren, sich die Führungsfläche (36) nach innen erstreckt, während sie sich von einer oberen Seitenfläche des Kragenabschnitts (35) zu einer inneren Seitenfläche des Hauptkörperabschnitts (31) nach unten erstreckt, und sich eine obere Kante der Führungsfläche (36) weiter außen befindet als die äußere Seitenfläche des Hauptkörperabschnitts (31).

12. Ein Einsteckverbindungsteil (40), das konfiguriert ist, um mit dem Aufnahmeverbindungsteil (30) gemäß Anspruch 1 gekoppelt zu werden, das an einem ersten Artikel (10) befestigt ist, um einen zweiten Artikel (20), der an dem Einsteckverbindungsteil (40) befestigt ist, mit dem ersten Artikel (10) zu verbinden, wobei das Einsteckverbindungsteil (40) einen Einführabschnitt (41) beinhaltet, der Einführabschnitt (41) in Abwärtsrichtung nacheinander einen anliegenden Abschnitt (411) und einen Kopfabschnitt (412) beinhaltet; der Kopfabschnitt (412) durch Einführen nach unten in die Einführnut (310) des Aufnahmeverbindungsteils (30) auf das Paar elastische Wände (32) des Aufnahmeverbindungsteils (30) drücken kann, um das Paar elastische Wände (32) elastisch nach außen verformen zu lassen, sodass das Paar anliegende Enden (321) des Paars elastische Wände (32) es dem Kopfabschnitt (412) ermöglicht, durch das Paar anliegende Enden (321) hindurchzugehen, und gegen den anliegenden Abschnitt (411) anliegen kann, nachdem der Kopfabschnitt (412) durch das Paar anliegende Enden (321) hindurchgegangen ist, um zu verhindern, dass der Kopfabschnitt (412) nach oben herausgezogen wird, wobei der anliegende Abschnitt (411) eine Vielzahl von Stufenabschnitten (413) beinhaltet, die in einer Abwärtsrichtung angeordnet sind, **dadurch gekennzeichnet, dass** die Vielzahl von Stufenabschnitten (413) Breiten aufweisen, die in der Abwärtsrichtung in aufeinanderfolgender Reihenfolge zunehmen, wobei jeder Stufenabschnitt (413) mit einem Paar anliegende Flächen (414, 415) versehen ist und sich das Paar anliegende Flächen (414, 415) jeweils auf zwei gegenüberliegenden Seiten des anliegenden Abschnitts (411) in der Breitenrichtung befindet.

13. Einsteckverbindungsteil (40) gemäß Anspruch 12, wobei sich jede anliegende Fläche nach außen erstreckt, während sie sich nach unten erstreckt.

## Revendications

1. Un raccord femelle (30), configuré pour être fixé à un premier article (10) et être couplé à un raccord mâle (40) fixé à un deuxième article (20), de manière à raccorder le premier article (10) au deuxième article (20), où le raccord femelle (30) comprend :
une partie formant corps principal (31), comprenant une paire de parois latérales (311), chaque paroi latérale (311) s'étendant dans le sens de la longueur, et la paire de parois latérales (311) étant espacées l'une de l'autre dans le sens de la largeur pour définir,
entre la paire de parois latérales (311), une rainure d'insertion (310) pour une partie d'insertion (41) du raccord mâle (40) à insérer, et la partie d'insertion (41) comprenant, séquentiellement vers le bas, une partie de butée (411) et une partie formant tête (412) ; et
une paire de parois élastiques (32), s'étendant respectivement vers le bas et vers l'intérieur à partir de la paire de parois latérales (311) pour former respectivement une paire d'extrémités de butée (321) s'étendant dans la rainure d'insertion (310), où la paire de parois élastiques (32) sont configurées pour être en mesure de se déformer élastiquement vers l'extérieur lorsque la paire de parois élastiques (32) sont pressées vers l'extérieur par la partie formant tête (412) insérée vers le bas, de telle sorte que la paire d'extrémités de butée (321) permettent à la partie formant tête (412) de passer entre la paire d'extrémités de butée (321), et peuvent venir en butée contre la partie de butée (411) après que la partie formant tête (412) est passée entre la paire d'extrémités de butée (321) de manière à empêcher que la partie formant tête (412) soit retirée vers le haut ; la rainure d'insertion (310) est configurée pour permettre à la partie d'insertion (41) de coulisser entre une première position et une deuxième position par rapport au raccord femelle (30) dans le sens de la longueur dans la rainure d'insertion (310), de telle sorte que lorsque la partie d'insertion (41) est située au niveau de la première position, la paire d'extrémités de butée (321) viennent en butée contre la partie de butée (411), et lorsque la partie d'insertion (41) est située au niveau de la deuxième position, la paire d'extrémités de butée (321) ne viennent pas en butée contre la partie de butée (411), de manière à permettre à la partie d'insertion (41) d'être retirée vers le haut à partir de la rainure d'insertion (310).

2. Le raccord femelle (30) selon la revendication 1, où chaque paroi élastique (32) a une forme, en coupe transversale, d'arc qui est convexe vers l'extérieur.

3. Le raccord femelle (30) selon la revendication 2, où une courbure de chaque paroi élastique (32) augmente vers le bas, et/ou une épaisseur de chaque paroi élastique (32) diminue vers le bas.

4. Le raccord femelle (30) selon la revendication 1, où le raccord femelle (30) comprend en outre une pluralité de parties de couplage (33), et la pluralité de parties de couplage (33) s'étend vers l'extérieur à partir d'une surface latérale externe de la partie formant corps principal (31) et/ou s'étend vers l'extérieur à partir de deux surfaces latérales externes de la paire de parois élastiques (32).

5. Le raccord femelle (30) selon la revendication 4, où une surface latérale supérieure (331) de chaque partie de couplage (33) s'étend vers l'extérieur tout en s'étendant vers le bas.

6. Le raccord femelle (30) selon la revendication 4 ou la revendication 5, où la pluralité de parties de couplage (33) comprend une paire de premières parties de couplage (33a), la paire de premières parties de couplage (33a) s'étendent vers l'extérieur à partir des deux surfaces latérales externes de la paire de parois élastiques (32) respectivement, et une surface d'extrémité de chaque extrémité de butée (321) s'étend vers l'extérieur tout en s'étendant vers le bas.

7. Le raccord femelle (30) selon la revendication 6, où la pluralité de parties de couplage (33) comprend en outre une paire de deuxièmes parties de couplage (33b), et la paire de deuxièmes parties de couplage (33b) s'étendent vers l'extérieur respectivement à partir de deux surfaces latérales externes de la paire de parois latérales (311).

8. Le raccord femelle (30) selon la revendication 7, où chaque première partie de couplage (33a) et une deuxième partie de couplage (33b) correspondante sont situées sur un même côté du raccord femelle (30) dans le sens de la largeur, la première partie de couplage (33a) et la deuxième partie de couplage (33b) sont substantiellement de niveau dans le sens de la hauteur et sont espacées l'une de l'autre dans le sens de la longueur, une partie d'extrémité (332a), de la première partie de couplage (33a), loin de la deuxième partie de couplage (33b) s'étend progressivement vers l'intérieur tout en s'étendant loin de la deuxième partie de couplage (33b) dans le sens de la longueur, et une partie d'extrémité (332b), de la deuxième partie de couplage (33b), loin de la première partie de couplage (33a) s'étend progressivement vers l'intérieur tout en s'étendant loin de la première partie de couplage (33a) dans le sens de la longueur.

9. Le raccord femelle (30) selon la revendication 4 ou la revendication 5, où le raccord femelle (30) comprend en outre une paire de parois d'extrémité (312, 313), la paire de parois d'extrémité (312, 313) sont respectivement situées au niveau de deux extrémités de la paire de parois latérales (311) dans le sens de la longueur, chaque paroi d'extrémité s'étend entre la paire de parois latérales (311), la paire de parois d'extrémité (312, 313) comprend une première paroi d'extrémité (312) et une deuxième paroi d'extrémité (313), la pluralité de parties de couplage (33) comprend en outre une troisième partie de couplage (33c), la troisième partie de couplage (33c) s'étend vers l'extérieur respectivement à partir d'une surface latérale externe de la première paroi d'extrémité (312), une surface latérale externe de la deuxième paroi d'extrémité (313) est pourvue d'une pluralité de parties formant bandes convexes (34), et des surfaces latérales externes de la pluralité de parties formant bandes convexes (34) définissent ensemble une surface cylindrique.

10. Le raccord femelle (30) selon la revendication 1, où le raccord femelle (30) comprend en outre une partie formant jupe (35) qui est située au niveau d'une extrémité supérieure de la partie formant corps principal (31) et s'étend vers l'extérieur à partir d'une surface latérale externe de la partie formant corps principal (31).

11. Le raccord femelle (30) selon la revendication 10, où la partie formant jupe (35) et la partie formant corps principal (31) définissent ensemble une surface de guidage (36), la surface de guidage (36) s'étend vers l'intérieur tout en s'étendant vers le bas à partir d'une surface latérale supérieure de la partie formant jupe (35) jusqu'à une surface latérale interne de la partie formant corps principal (31), et un bord supérieur de la surface de guidage (36) est situé plus vers l'extérieur que la surface latérale externe de la partie formant corps principal (31).

12. Un raccord mâle (40), configuré pour être couplé au raccord femelle (30) selon la revendication 1 fixé à un premier article (10), de manière à raccorder un deuxième article (20) fixé au raccord mâle (40) au premier article (10), où le raccord mâle (40) comprend une partie d'insertion (41), la partie d'insertion (41) comprend, séquentiellement vers le bas, une partie de butée (411) et une partie formant tête (412) ; la partie formant tête (412) peut presser, par insertion vers le bas dans la rainure d'insertion (310) du raccord femelle (30), la paire de parois élastiques (32) du raccord femelle (30) pour amener la paire de parois élastiques (32) à se déformer élastiquement vers l'extérieur, de telle sorte que la paire d'extrémités de butée (321) de la paire de parois élastiques (32) permettent à la partie formant tête (412) de passer à travers la paire d'extrémités de butée (321), et peuvent venir en butée contre la partie de butée (411) après que la partie formant tête (412) est passée à travers la paire d'extrémités de butée (321) de manière à empêcher que la partie formant tête (412) soit retirée vers le haut, la partie de butée (411) comprend une pluralité de parties formant gradins (413) agencées dans un sens vers le bas, **caractérisé en ce que** la pluralité de parties formant gradins (413) ont des largeurs augmentant dans un ordre successif dans le sens vers le bas, chaque partie formant gradin (413) est pourvue d'une paire de surfaces de butée (414, 415), et la paire de surfaces de butée (414, 415) sont respectivement situées sur deux côtés opposés de la partie de butée (411) dans le sens de la largeur.

13. Le raccord mâle (40) selon la revendication 12, où chaque surface de butée s'étend vers l'extérieur tout en s'étendant vers le bas.
